# EUROPEAN PATENT APPLICATION

(11) **EP 4 815 527 A1**
(43) Date of publication of application: **30.09.2026**
(21) Application number: 25166587.3
(22) Date of filing: 27.03.2025
(51) Int. Cl.: H04W 8/18

(54) **METHODS, ARCHITECTURES, APPARATUSES AND SYSTEMS FOR UNIFIED AND DYNAMIC USER CONSENT MANAGEMENT FOR WIRELESS TRANSMIT RECEIVE UNIT DATA COLLECTION**

(71) Applicant: InterDigital Patent Holdings, Inc., Wilmington, DE 19809 (US)
(72) Inventor: FERDI, Samir, KIRKLAND, H9H 3V9 (CA); HASEGAWA, Fumihiro, WESTMOUNT, H3Z 2K5 (CA); ROY, Michel, CANDIAC, J5R 6C5 (CA); PANI, Diana, MONTREAL, H3C1Y9 (CA)
(74) Representative: Interdigital

(57) **Abstract**

Methods, architectures, apparatuses, and systems directed to unified and dynamic user consent management for wireless transmit/receive unit (WTRU) data collection are described herein. In an embodiment, a WTRU may receive a first message from a first network element, the first message indicating that user consent for data collection may be requested. The WTRU may obtain via a user interface an indication of the user consent for the data collection according to one or more data collection attributes. The WTRU may send a second message to the first network element, the second message indicating the user consent for the data collection. The WTRU may receive a third message indicating that a setup of a data session to perform the data collection may be requested. The WTRU may perform the data collection on the data session and transfer the data to a data collection end point.

## Description

### TECHNICAL FIELD

The present disclosure is generally directed to the fields of communications, software and encoding, including methods, architectures, apparatuses, and systems directed to unified and dynamic user consent management for wireless transmit/receive unit (WTRU) data collection.

### BACKGROUND

Different deployments may be considered for WTRU side data collection for the purpose of, for example, WTRU-side artificial intelligence and machine learning (AIML) model training. The collected data transfer may terminate at an external entity or inside the mobile network operator domain. Embodiments described herein have been designed with the foregoing in mind.

### SUMMARY

Methods, architectures, apparatuses, and systems directed to unified and dynamic user consent management for WTRU data collection are described herein. In an embodiment, a wireless transmit/receive unit (WTRU) is described. The WTRU may include circuitry including a transmitter, a receiver, a processor, and memory. The WTRU may be configured to receive a first message from a first network element. In various embodiments, the first message may indicate that user consent for data collection may be requested. In various embodiments, the first message may indicate a user consent reference and one or more data collection attributes to be consented by a user. The WTRU may be configured to obtain via a user interface an indication of the user consent for the data collection according to the one or more data collection attributes. The WTRU may be configured to send a second message to the first network element. In various embodiments, the second message may indicate the user consent reference and the user consent for the data collection. The WTRU may be configured to receive a third message indicating that any of a setup and a modification of a data session to perform the data collection may be requested. In various embodiments, the third message may include information related to any of data to be reported and a data collection end point. The WTRU may be configured to send a fourth message to a second network element. In various embodiments, the fourth message may indicate any of the setup of the data session, the modification of the data session, and the user consent reference. The WTRU may be configured to perform the data collection on the data session and to transfer the data to the data collection end point.

In an embodiment, a method implemented in a WTRU is described. The method may include receiving a first message from a first network element. In various embodiments, the first message may indicate that user consent for data collection may be requested. In various embodiments, the first message may indicate a user consent reference and one or more data collection attributes to be consented by a user. The method may include obtaining via a user interface an indication of the user consent for the data collection according to the one or more data collection attributes. The method may include sending a second message to the first network element. In various embodiments, the second message may indicate the user consent reference and the user consent for the data collection. The method may include receiving a third message indicating that any of a setup and a modification of a data session to perform the data collection may be requested. In various embodiments, the third message may include information related to any of data to be reported and a data collection end point. The method may include sending a fourth message to a second network element. In various embodiments, the fourth message may indicate any of the setup of the data session, the modification of the data session, and the user consent reference. The method may include performing the data collection on the data session and transferring the data to the data collection end point.

In an embodiment, a first network element is described. The first network element may include circuitry including a transmitter, a receiver, a processor, and memory. The first network element may be configured to receive a request message from a third network element. In various embodiments, the request message may indicate that user consent for data collection may be requested. In various embodiments, the request message may indicate a WTRU identifier and one or more data collection attributes to be consented by a user. In various embodiments the WTRU identifier may identify the WTRU. The first network element may be configured to determine that the user consent may be to be obtained from the user for the data collection based on the user consent policy information. The first network element may be configured to send a first message to the WTRU. In various embodiments, the first message may indicate that the user consent for the data collection may be requested. In various embodiments, the first message may indicate a user consent reference and the one or more data collection attributes to be consented by the user. The first network element may be configured to receive a second message from the WTRU. In various embodiments, the second message may indicate the user consent reference and the user consent for the data collection. The first network element may be configured to send a response message to the third network element. In various embodiments, the response message may indicate (i) the user consent reference associated with the WTRU identifier and (ii) the user consent for the data collection.

In an embodiment, a method implemented in a first network element is described. The method may include receiving user consent policy information associated with a WTRU. The method may include receiving a request message from a third network element. In various embodiments, the request message may indicate that user consent for data collection may be requested. In various embodiments, the request message may indicate a WTRU identifier and one or more data collection attributes to be consented by a user. In various embodiments the WTRU identifier may identify the WTRU. The method may include determining that the user consent may be to be obtained from the user for the data collection based on the user consent policy information. The method may include sending a first message to the WTRU. In various embodiments, the first message may indicate that the user consent for the data collection may be requested. In various embodiments, the first message may indicate a user consent reference and the one or more data collection attributes to be consented by the user. The method may include receiving a second message from the WTRU. In various embodiments, the second message may indicate the user consent reference and the user consent for the data collection. The method may include sending a response message to the third network element. In various embodiments, the response message may indicate (i) the user consent reference associated with the WTRU identifier and (ii) the user consent for the data collection.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref.") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 is a diagram illustrating a hybrid architecture example for dynamic user consent;
FIG. 3 is a diagram illustrating an evolved system architecture example for WTRU-network function (NF) communication;
FIG. 4 is a diagram illustrating an example procedure for network-initiated user consent collection;
FIG. 5 is a diagram illustrating an example procedure for WTRU-initiated user consent collection;
FIG. 6 is a diagram illustrating an example procedure for user consent revocation initiated by the WTRU;
FIG. 7 is a diagram illustrating an example procedure for user consent revocation initiated by the network;
FIG. 8 is a diagram illustrating an example procedure for a WTRU to suspend or renew user consent;
FIG. 9 is a diagram illustrating an example of incentive determination and exchange framework for data collection;
FIG. 10 is a diagram illustrating an example of royalty fee determination between entities;
FIG. 11 is a diagram illustrating another example of royalty fee determination between entities;
FIG. 12 is a diagram illustrating an example method for collecting user consent for data collection, implemented in a WTRU; and
FIG. 13 is a diagram illustrating an example method for collecting user consent for data collection, implemented in a first network element.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

### Example Communications System

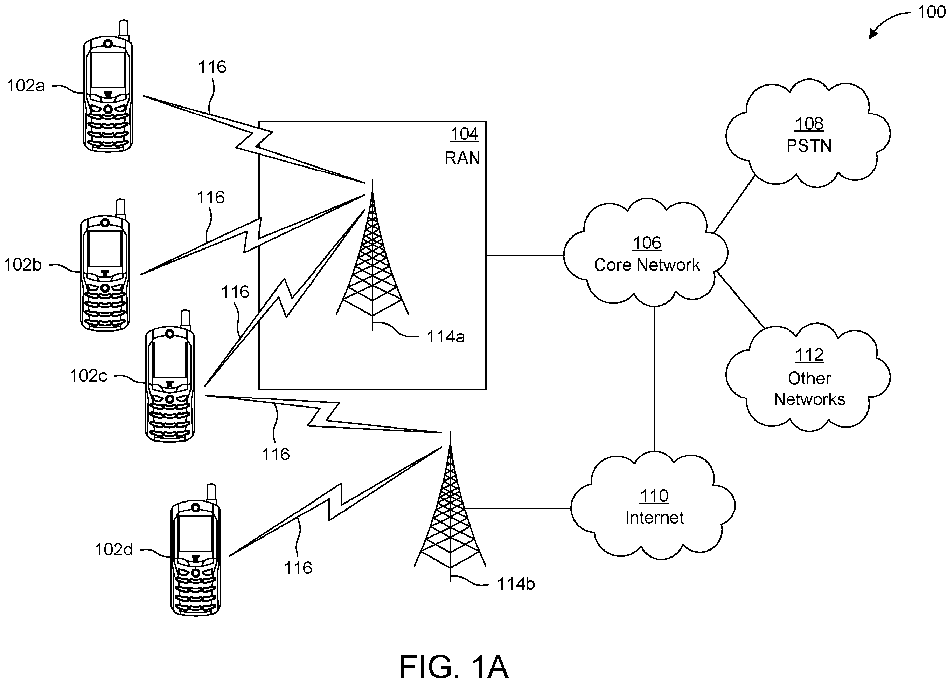

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discrete Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

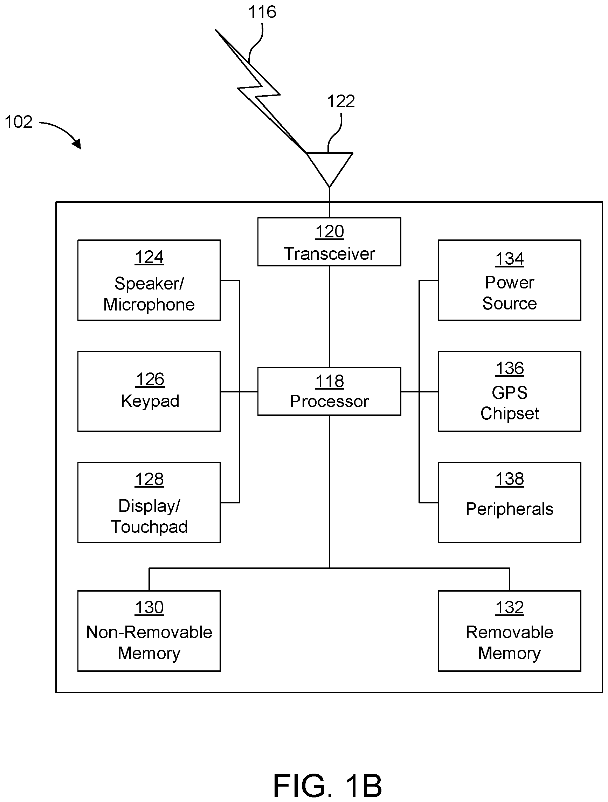

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134 and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

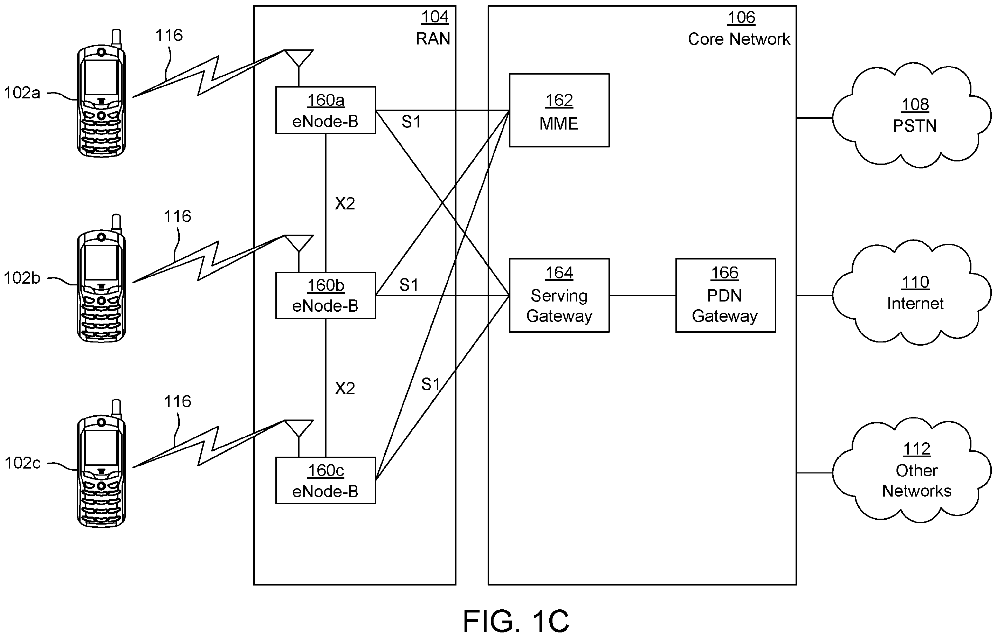

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11ah. The channel operating bandwidths, and carriers, are reduced in 802.11 af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

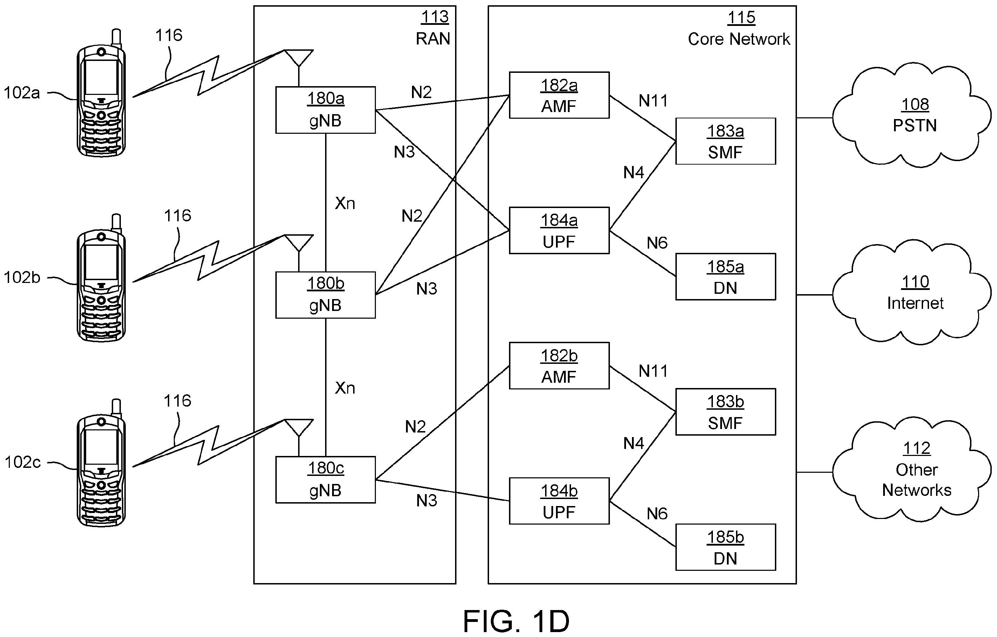

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b, e.g., to customize CN support for WTRUs 102a, 102b, 102c based on the types of services being utilized by WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 182a, 182b may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184a, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Throughout embodiments described herein the terms "base station", "network", "cell", and "gNB", collectively "the network" may be used interchangeably to designate any network element such as e.g., a network element acting as a serving base station. Embodiments described herein are not limited to gNBs and are applicable to any other type of base stations.

For the sake of clarity, satisfying, failing to satisfy a condition, and configuring condition parameter(s) are described throughout embodiments described herein as relative to a threshold (e.g., greater, or lower than) a (e.g., threshold) value, configuring the (e.g., threshold) value, etc. For example, satisfying a condition may be described as being above a (e.g., threshold) value, and failing to satisfy a condition may be described as being below a (e.g., threshold) value. Embodiments described herein are not limited to threshold-based conditions. Any kind of other condition and parameter(s) (such as e.g., belonging or not belonging to a range of values) may be applicable to embodiments described herein.

Throughout embodiments described herein, (e.g., configuration) information may be described as received by a WTRU from the network, for example, through system information or via any kind of protocol message. Although not explicitly mentioned throughout embodiments described herein, the same (e.g., configuration) information may be preconfigured in the WTRU (e.g., via any kind of pre-configuration methods such as e.g., via factory settings), such that this (e.g., configuration) information may be used by the WTRU without being received from the network.

Throughout embodiments described herein, the expression "the WTRU may be configured with a set of parameters" is equivalent or may be used interchangeably with "the WTRU may receive configuration information (e.g., from another network element (e.g., gNB)) indicating a set of parameters". Throughout embodiments described herein, the expressions "the WTRU may report/notify something", and "the WTRU may be configured to report/notify something", is equivalent or may be used interchangeably with "the WTRU may transmit (e.g., reporting) information indicating something". Throughout embodiments described herein, the expression "the WTRU may provide (/be provided) with a set of parameters (/something)" is equivalent or may be used interchangeably with "the WTRU may transmit (/receive) information indicating a set of parameters (/something)".

In embodiments described herein, "a" and "an" and similar phrases are to be interpreted as "one or more" and "at least one". Similarly, any term which ends with the suffix "(s)" is to be interpreted as "one or more" and "at least one". The term "may" is to be interpreted as "may, for example".

A symbol "/" (e.g., forward slash) may be used herein to represent "and/or", where for example, "A/B" may imply "A and/or B".

In embodiments described herein, "list of", "set of" and "one or more of" may be used interchangeably.

In embodiments described herein, "identity" and "identifier" may be used interchangeably to refer to how a network element (or a WTRU) may be identified.

In embodiments described herein, a network element may refer to any kind of device including computing resources and networking capabilities, that may be connected to a network. The terms "network element", "node" and "entity" may be used interchangeably. A network element may be any kind of network infrastructure device and or a WTRU. The architecture depicted at FIG. 1B for a WTRU 102 may be applicable more generally to any kind of network element.

Embodiments are described herein with a user consent control function (UCCF) network element as an example network element for controlling user consent. Embodiments described herein are not limited to a UCCF and any network element (that may be referred to herein as first network element) may be applicable to embodiments described herein. In embodiments described herein the terms "sixth generation (6G) UCCF" and "UCCF" may be used interchangeably.

Embodiments are described herein with a SMF network element as an example network element for session management. Embodiments described herein are not limited to a SMF and any network element (that may be referred to herein as second network element) may be applicable to embodiments described herein.

Embodiments are described herein with a data collection network function (NF) network element as an example network element for collecting data. Embodiments described herein are not limited to a data collection NF and any network element (that may be referred to herein as third network element) may be applicable to embodiments described herein.

Embodiments are described herein with a user consent request message and a user consent response message as two examples of messages for respectively requesting a user consent for collecting data to a WTRU and responding by the WTRU with a user consent for collecting the data. Embodiments described herein are not limited to user consent request/response messages and any messages (that may be referred to herein as first/second messages) may be applicable to embodiments described herein.

Embodiments are described herein with a connection command message as an example of message for triggering a data collection session (setup/modification). Embodiments described herein are not limited to a connection command message (that may be referred to herein as third message) and any messages for triggering a data collection session (setup/modification) may be applicable to embodiments described herein.

Embodiments are described herein with a PDU session as an example session for performing data collection. Embodiments described herein are not limited to a PDU session (that may be referred to herein as data session) and any kind of session for performing data collection may be applicable to embodiments described herein.

Embodiments are described herein with a PDU session establishment request message and a PDU session modification request message as two examples of messages for respectively establishing and modifying a PDU session to be used for collecting data. Embodiments described herein are not limited to a PDU session establishment request message and a PDU session modification request message (that may be referred to herein as fourth message) and any messages for establishing and/or modifying a data session may be applicable to embodiments described herein.

Embodiments are described herein with a user consent update notification/command message and a user consent update notification ack / command response message as two examples of messages for respectively notifying/requesting an update of a user consent for collecting data and acknowledging the user consent update. Embodiments described herein are not limited to user consent update notification/command messages (that may be referred to herein as fifth message) and any messages for managing user consent update may be applicable to embodiments described herein.

Embodiments are described herein with a PDU session release/modification request message as an example of message for releasing/modifying a PDU session used for collecting data. Embodiments described herein are not limited to a PDU session release/modification request message (that may be referred to herein as sixth message) and any messages for releasing/modifying a data session may be applicable to embodiments described herein.

User consent collection is described herein.

In an example, a WTRU may collect consent from user (e.g., via a user interface) for a data collection session upon network (e.g., UCCF) request including, for example, user consent reference identifier (ID). The WTRU may provide the network with a user consent acceptance with the user consent reference ID. The WTRU may set up a PDU session associated with the user consent reference ID and the data collection session.

The WTRU behavior is described herein.:
In an example, the WTRU may register with the network providing (e.g., indicating) any of dynamic user consent capabilities, data collection capabilities including a type of data that the WTRU may collect (e.g., any of sensing and AIML model training data).

In an example, the WTRU may receive a request (e.g., first) message from the network (e.g., UCCF) indicating a request for user consent for data collection operation. The request (e.g., first) message may indicate that user consent for data collection may be requested. The request (e.g., first) message may include (e.g., indicate) a user consent reference ID (UC-RID) and one or more data collection attributes to be consented by the user (e.g., any of data collection type, requesting entity (mobile network operator (MNO), application function (AF))).

In an example, the WTRU may prompt the user for consenting the data collection, based on, for example, displaying the one or more data collection attributes.

In an example, the WTRU may obtain, via a user interface, a response from the user with an indication of consent or rejection for the data collection.

In an example, the WTRU may send a response (e.g., second) message to the network including any of the UC-RID and an indication of user consent being given or rejected for the data collection.

In an example, the WTRU may store locally any of the UC-RID and a data collection session reference identifier (DCS-RID).

On the condition of WTRU sending an indication of user consent given, the WTRU may receive a command (e.g., third message indicating/requesting) to setup or modify a PDU session to perform the data collection. The command (e.g., third message) may include any of a data network name (DNN), a single network slice selection assistance information (S-NSSAI) and information about any of data (e.g., any of measurements, positioning) to be reported and data collection end point.

In an example, the WTRU may send the UC-RID and DCS-RID to the SMF in a fourth message (e.g., PDU session establishment/modification request message). The fourth message may indicate any of the setup of a data session, the modification of a data session, and the user consent reference.

In an example, the WTRU may transfer data to the data collection end point (e.g., via the data session).

In an example, the WTRU may display information about the ongoing data collection session to the user e.g., associated with DCS-RID, e.g., via the user interface.

UCCF behavior is described herein.

In an example, the UCCF may receive information (e.g., from any of AMF, unified data management (UDM), the WTRU) about any of WTRU dynamic user consent capabilities, data collection capabilities including type of data that the WTRU may collect (e.g., any of sensing, AIML model training data).

In an example, the UCCF may receive from a UDM/unified data repository (UDR) and/or a policy control function (PCF) user consent policy information for the WTRU (e.g., indicating any of a data sharing policy, a data collection (e.g., while) roaming policy, a list of applications authorized for data sharing) for the various data collection types (e.g., any of AIML model training, sensing).

In an example, the UCCF may receive a request message from an NF (e.g., any of a network data analytics function (NWDAF), a data collection function, a network exposure function (NEF), an application function (AF), a sensing control function) for user consent for data collection. The request message may include any of a WTRU ID (e.g., any of a subscription permanent identifier (SUPI), a generic public subscription identifier (GPSI)), one or more data collection attributes (as described herein for the WTRU behavior).

In an example, the UCCF may verify whether the data collection request is authorized for the NF based on the data retrieved from UDM/UDR (e.g., data collection type being authorized) and may verify whether user consent exists for the WTRU for a data collection matching the given data collection attributes. For example, the UCCF may determine that the user consent may be to be obtained from the user for the data collection at least based on user consent policy information.

For example, the NF may be subscribed to user consent update notifications by the UCCF, who may store the NF information as part of a data collection user consent context.

For example, the UCCF may allocate a (e.g., unique) UC-RID and may store the information in a data collection user consent context for the WTRU.

In an example, the UCCF may send an acknowledgement for the request to the NF providing it with the UC-RID.

In an example, the UCCF may send to the WTRU a request (e.g., first) message indicating a request for user consent for data collection operation, the (e.g., first) message may include any of the UC-RID and one or more data collection attributes to be consented by the user:

In an example, the UCCF may receive a response (e.g., second) message from the WTRU including the UC-RID and indicating whether the user consented or rejected the data collection (e.g., the second message indicating a user consent (e.g., acceptance) or a user rejection for the data collection).

On the condition that the user consented for the data collection, the UCCF may notify (e.g., send information to) the NF (e.g., indicating) that the user consented for the data collection providing the UC-RID.

In an example, the NF may initiate sending to the WTRU a command (via AMF/RAN) to any of setup and modify a PDU session to perform the data collection. The command may include (e.g., indicate) the data collection end point.

In an example, the UCCF may receive a message from SMF indicating the PDU session ID and associated UC-RID. The UCCF may store the SMF ID, PDU session information (e.g., PDU session ID, IP address) in the data collection user consent context identified by UC-RID.

In an example, the UCCF may send to UDM/UDR active consent providing any of WTRU ID, UC-RID, SMF ID, PDU session information and one or more data collection attributes (e.g., data collection type).

User consent revocation is described herein.

In an example, a WTRU may inform the network (UCCF) about user consent being revoked for a data collection session, for example, upon a user request. The WTRU may provide the network with the user consent reference ID associated with the data collection session. The WTRU may release or modify the PDU session used for the data collection.

A WTRU behavior (WTRU initiated revocation) is described herein.

In an example, the WTRU may receive from the user (e.g., via a user interface) an indication of consent being revoked for a data collection associated with a DCS-RID (e.g., ongoing or previously consented).

In an example, the WTRU may stop transferring data for the ongoing data collection session (if any).

In an example, the WTRU may send a notification message to the network (UCCF) including the indication of user consent revocation for the data collection. The message may include any of the UC-RID and DCS-RID.

In an example, the WTRU may receive a notification ack message from the network (UCCF) acknowledging the user consent revocation for the data collection.

In an example, the WTRU may receive a command from SMF to modify or release the PDU session used for the data collection. In another example, the WTRU may initiate (e.g., a message/command indicating) any of a modification and a release of the PDU session upon (e.g., based on) receiving ack from UCCF.

UCCF behavior (WTRU initiated revocation) is described herein.

In an example, the UCCF may receive a notification message from the WTRU including the indication of user consent revocation for a data collection. The message may include any of the UC-RID, and DCS-RID.

In an example, the UCCF may locate the data collection user consent context associated with UC-RID.

In an example, the UCCF may send a notification ack message to the WTRU.

In an example, the UCCF may notify any of the associated SMF and data collection NF about the user consent revocation for the data collection. For example, the UCCF may inform the serving SMF providing any of the WTRU ID and PDU session ID for network triggered PDU session release or modification.

UCCF behavior (network-initiated revocation e.g., triggered by user interacting with operator portal) is described herein.

In an example, the UCCF may receive a notification message from any of the UDM/UDR, a network exposure function (NEF), an AF, including the indication of user consent revocation for a data collection. The message may include a WTRU ID, and any of UC-RID, and other data collection attributes (e.g., data collection type).

In an example, the UCCF may locate the data collection user consent context associated with the WTRU ID and matching any of any of UC-RID, other data collection attributes (e.g., data collection type).

In an example, the UCCF may send a command message to the WTRU including UC-RID and indicating revocation of data collection associated with UC-RID. For example, the WTRU may stop transferring data for the ongoing data collection session (if any).

In an example, the UCCF may receive a command ack from the WTRU.

In an example, the UCCF may notify any of the associated SMF and data collection NF about the user consent revocation for the data collection. For example, the UCCF may inform the serving SMF providing any of the WTRU ID and PDU session ID for network triggered PDU session release or modification.

User consent suspend/renew is described herein.

The WTRU behavior may be similar to the WTRU behavior described for user consent revocation with any of the following differences: (i) WTRU may indicate "suspend" or "renew" in the user consent update notification message to UCCF, (ii) UCCF may notify the NF with "suspend" or "renew", (iii) WTRU may suspend or resume transfer of data using the existing PDU session, (iv) WTRU may receive the notification ack message from UCCF indicating how long (e.g., using a "suspend" timer) the user consent may remain suspended for the data collection, (v) WTRU may prompt the user to renew user consent for data collection when "suspend" timer expires, and (vi) UCCF/NF may notify SMF to release PDU session if consent is not renewed within a period based on the "suspend" timer.

WTRU side data collection characteristics (e.g., requirements) are described herein.

Different deployment may be considered for WTRU side data collection for the purpose of, for example, WTRU-side AIML model training, where the collected data transfer may terminate (i) (e.g., directly) at an external entity (e.g., network element),such as e.g., an over the top (OTT) server or (ii) inside the mobile network operator (MNO) domain first (e.g., any of AF/NF, core network, operation and maintenance (OAM)) before being transferred to the external entity (e.g., OTT server). Related to the case (ii), the data collection process may provide operator controllability and visibility of "standardized" data. Related to the case (i), some (e.g., or all) of the data may be transferred to the OTT server transparently to the MNO (e.g., including WTRU proprietary information along standardized data content). Data transfer using any of user plane (UP) and control plane (CP) (e.g., radio resource control (RRC) /non-access stratum (NAS)) tunnel may be applicable.

Any of the following characteristics (e.g., requirements) may apply for the data collection for WTRU-sided AIML model training: (i) data collected may be (e.g., fully) protected (any of integrity, confidentiality), (ii) compliance with user data privacy and user consent requirements (e.g., based on local regulations), (iii) WTRU-side data collection process may be under (e.g., full) MNO control (e.g., initiate, terminate procedure) and visibility for standardized data, (iv) the mechanisms described herein may be future proof and/or extendable.

Sensing and positioning user data collection is described herein.

Data collection for positioning is described herein.

In positioning systems, a WTRU and a gNodeB (gNB) may communicate measurements to the location management function (LMF), a network element that may facilitate any of positioning and sensing. The WTRU may receive positioning reference signals (PRS) from the network and may measure these signals. The WTRU may (e.g., also) obtain downlink reference signal (DL-RS) (e.g., PRS) configurations and assistance data, such as any of transmission reception point (TRP) locations and network synchronization errors. Depending on its configuration, the WTRU may perform any of (i) WTRU-based positioning (e.g., the WTRU may measure PRS and may determine its own location) and (ii) WTRU-assisted positioning (e.g., the WTRU may measure PRS and may report these measurements to the network).

Measurements reported by the WTRU may include any of timing information (e.g., reference signal time difference (RSTD)), power information (e.g., reference signal received power (RSRP)), and phase information. These reports may be sent via higher layer signaling protocols such as e.g., the LTE positioning protocol (LPP).

The network may request specific measurements from the WTRU, indicating, for example, the types of measurements requested. The WTRU's measurement activities may be influenced by the configured positioning method, which may include any of (i) downlink (DL) positioning methods (e.g., based on downlink reference signals such as e.g., PRS), (ii) uplink (UL) positioning methods (e.g., based on uplink reference signals such as e.g., sounding reference signals (SRS)), (iii) DL & UL positioning methods (e.g., based on uplink and downlink reference signals).

For UL positioning methods, the WTRU may transmit SRS to the network, allowing the gNB to perform measurements and report them to the LMF. The WTRU may receive requests from the network (e.g., LMF) to transmit configured SRS and may (e.g., also) receive configurations for SRS intended for positioning purposes.

Positioning characteristics (e.g., requirements), such as accuracy expressed in meters, may be communicated from the LMF to the WTRU. In an example, the WTRU may receive measurements and location information from positioning reference units (PRUs) via the network and may request PRU measurements from the LMF. The location of the PRU may be known by the network and information related to the PRU (e.g., identity, WTRU identifier (ID)) may be registered at the network.

Data collection for artificial intelligence and machine learning (AIML)-based positioning is described herein.

In AIML-based positioning, data collection may involve any of the WTRU, PRU, and gNB reporting to the LMF. The WTRU may (e.g., be configured to) collect data on DL-RS (e.g., PRS) and report measurements (e.g., any of timing, power, phase) along with ground truth data, such as estimated location based on its measurements. These reports may be made based on network request or initiated by the WTRU for data collection purposes. The WTRU may (e.g., also) be configured with an AIML-based positioning method and can request PRS configurations for data collection.

In an example, the WTRU may acquire (e.g., receive) any of measurements and ground truth data from the network, including measurements made by other WTRUs or PRUs. The WTRU may associate its measurements with ground truth data and report them to the network, attaching (e.g., including) information such as any of timestamps and quality indicators (e.g., measurement uncertainty).

Assistance data from the network may aid (e.g., assist) the WTRU in performing PRS measurements and/or determining the applicability of AIML methods. For example, the network may provide data indicating consistency between AIML model training and inference phases, identified by an associated ID.

The network may request the WTRU to transmit SRS for data collection, for example, configuring the WTRU with a duration for these transmissions and uplink reference signal (UL-RS e.g., SRS) configurations.

Data collection related to sensing is described herein.

Data collected by or from the WTRU may include measurements and/or target location estimates related to environmental sensing. Target location estimates may pertain to objects such as any of vehicles, humans, buildings, automated guided vehicles (AGVs), and unmanned aerial vehicles (UAVs), expressed in absolute or relative terms to a reference point (e.g., the WTRU, TRP, or another reference location).

The WTRU may report measurements to the network, which may include any of timing measurements (e.g., any of time of arrival, RSTD, relative time of arrival), power measurements (e.g., any of RSRP, RSRP per path), and phase measurements (e.g., any of reference signal carrier phase, phase difference). Timing measurements may encompass multipath measurements (e.g., any of channel impulse response, power delay profile, delay profile). The network (e.g., any of gNB, core network entity such as an LMF) may request these measurements, and the WTRU may use protocols such as LPP to report them to core network entities such as the LMF or any sensing function. The WTRU may report measurements to the gNB via a semi-static message (e.g., RRC).

In an example, the WTRU may receive (e.g., information indicating) one or more DL-RS configurations from the network to facilitate sensing-related measurements.

A DL-RS configuration may include parameters such as any of the number of symbols, a transmission power, a number of DL-RS resources in a set, cell ID, a global cell ID, applicable time windows etc.

A UL-RS configuration may include parameters such as any of the number of symbols, spatial relationship information with respect to DL-RS or UL-RS, a periodicity, UL-RS ID, for example.

In embodiments described herein, "network" may refer to any of a function, a node, a network element, and a protocol that may terminate in any of (i) the radio access network (e.g., gNB, next generation radio access network (NG-RAN) network element), (ii) the core network (e.g., any of access and mobility management function (AMF), LMF, data collection function) and (iii) the network application enablement layer (e.g., any of a AIML enablement server, a spatial mapping server, a data collection server). Embodiments are described herein with the LMF as an example network element used to support positioning or sensing. Any node/network element/entity serving similar functions may be applicable to embodiments described herein.

In embodiments described herein, the WTRU may receive, in the request sent from the network, information indicating any of a cause and an intent for the request, such as for any of positioning, AIML-based positioning, and sensing purpose, for example.

User consent and user information exposure are described herein.

Third generation partnership project (3GPP) has specified a user consent framework which provides technical means for operators to manage subscriber permissions in the MNO domain (in the UDM/UDR) for exposure of subscription related data in accordance with local regulations.

3GPP has specified a mechanism for the control of exposure of WTRU location by means of WTRU location services (LCS) privacy profile. The LCS privacy profile may allow a WTRU to control which LCS clients and AFs may be allowed to access WTRU location information.

Data privacy protection regulations are described herein.

Privacy regulations such as e.g., general data protection regulation (GDPR) have provisions that may apply to the "data controller" or "processor" organizations (e.g., MNO) with regards to personal data handling such as to give individuals more control over their personal data by setting strict rules on how organizations may collect, store, and use that data. Personal data may be referred to as any information that may be used to identify an individual "data subject" (e.g., network identifier). Significant fines may be imposed in the case of non-compliance.

User consent in common application programing interface framework (CAPIF) is described herein.

CAPIF is a framework that provides a common interface for exposing network services and capabilities via application programming interfaces (APIs). It may enable secure and standardized access to APIs across different network functions.

Resource owner-aware northbound API access (RNAA) is a security and access control mechanism in CAPIF ensuring that northbound API requests (e.g., from external applications or third-party services) may be authorized by the resource owner before accessing network resources.

The CAPIF core function (CCF) is a central component of CAPIF that may be responsible for managing API exposure, security, and access control (e.g., RNAA) in a standardized way.

The RNAA user consent provided via CAPIF, and core network (CN) user consent provided via the NEF may be independent and may differ in scope.

RNAA user consent may relate to consenting for user data to be accessed by northbound API invokers (e.g., from external applications or third-party services). User consent may be provided per user (e.g., resource owner identifier), per application (e.g., API invoker identity), per API, and per scope and purpose of data processing. This user consent may be used to authorize accessing privacy-related (sensitive) information.

CN user consent may relate to consenting for user data to be used within the 5G core for the purpose of data processing. This user consent may be exposed externally via the NEF to indicate whether a user may have consented for its data to be used, for example, when required by regional regulations or operator's policies.

There is currently no unification and relationship between the CN user consent and the RNAA user consent.

Advancement of network data usage for AIML model training, new sensing capabilities may increase the application of data collected from WTRUs. Such data collection may be used by operators for network performance improvements and/or for monetization purposes (e.g., sharing/exposure of collected data to external third parties), e.g., for providing additional services. The data collection may take place transparently and without user awareness (e.g., treated as non-chargeable traffic). The data collection process may, for example, negatively impact the regular network services delivery user experience.

The user data may be subject to data sovereignty and privacy regulations as described herein. For example, an opt-in consent may be required by default through explicit and unambiguous means. Current user consent framework may use a static model with user consent settings pre-set in the UDM/UDR, as described herein. For example, a user may wish to revoke its consent for ongoing data collection sessions (e.g., when experiencing performance issues, power usage issues). The operator may wish to solicit and obtain the user consent on demand for the WTRU to perform on the spot operation (e.g., sensing) for which the user did not opt-in (e.g., through operator portal, mobile service contract). Embodiments described herein provide mechanisms to capture user consent or revocation of consent through affirmative/explicit action from the user, e.g., via a user interface.

Embodiments described herein provide mechanisms to capture user consent (or revocation thereof) dynamically to comply with personal data processing regulations and to support different data collection examples, allowing users to provide consent or revoke consent for data collections at any time.

Embodiments described herein allow the user consent framework to support exposure of user consent for data exposure/sharing with external third-party.

Embodiments described herein may allow to incentivize users to enroll/participate in data collection processes (to gain consent). Embodiments described herein may allow to determine a value of data allowing to determine incentives for users.

Embodiments described herein may allow the system to differentiate, and handle data (e.g., including charging) collected for network purposes from data collected for the user individual services.

Embodiments described herein may allow the system to ensure that network-purposed data collection communications may not affect individual user experience for regular network services.

Mechanisms are described herein where the system (referred to herein as 6GS) may enable dynamic user consent protocol and procedure between the WTRU and the network (UCCF). The WTRU may exchange message with a UCCF for any of the grant, revocation, suspension/resumption of user consent for a data collection session characterized by one or more attributes (e.g., any of type, scope). The WTRU and the network may track the user consent associated with the data collection session. The UCCF may enforce user consent control policy obtained from a PCF and by interacting with NFs (e.g., any of data collection function, SMF serving the data collection PDU session).

The mechanisms described herein may enable exposure to the user of when a WTRU may be solicited by the network to perform data collection operations. The user may decide to grant or revoke his consent for initiated or active data collection operations on WTRU. The mechanisms provide means for the operator to comply with local data privacy protection regulations, in different dynamic data collection scenarios.

Mechanisms described herein may enable the operator to determine the value of data collected and used for monetization purposes and establish incentives schemes to obtain user consent for data collection.

An example architecture or user consent management is described herein.

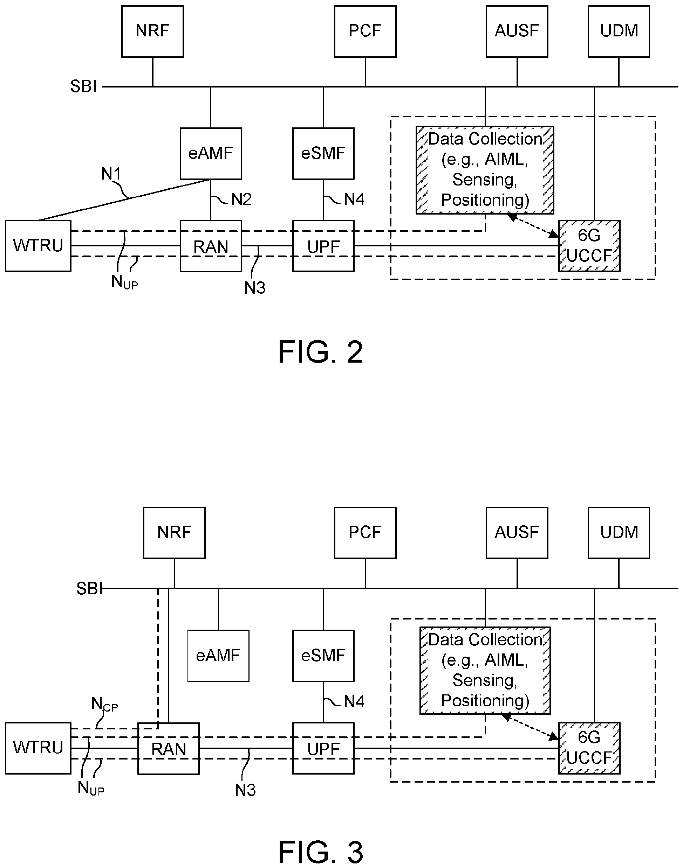

FIG. 2 and FIG. 3 illustrate two example architectures of the system to support dynamic user consent for WTRU data collection.

FIG. 2 is a diagram illustrating a hybrid architecture example for dynamic user consent, for example, using (e.g., conventional) N1 interface. As shown at FIG. 2, the N1 interface may be located between the WTRU and the evolved AMF (eAMF), the N2 interface may be located between the RAN and the eAMF, the N3 interface may be located between the RAN and the UPF, and the N4 interface may be located between the UPF and an evolved SMF (eSMF). The WTRU may use a (e.g., conventional) N1 interface for CP-terminated communication with legacy/evolved 5GS functions (e.g., mobility management (MM), session management (SM), PCF). The WTRU may communicate using user plane (UP)-based communications via UPF (e.g., illustrated as N_{UP} interface in FIG. 2) with some applicable NFs (e.g., data collection). The WTRU may communicate with a (e.g., 6G) user consent control function (UCCF) via CP (AMF) or via UPF. The new functionality (e.g., 6G) UCCF introduced in the architecture above is further described herein.

FIG. 3 is a diagram illustrating an evolved system architecture example for WTRU-NF communication. A difference with the hybrid architecture example may include that the WTRU may use RAN as a service-based interface (SBI) gateway for CP-terminated communications. The WTRU may communicate with (e.g., 6G) user consent control function (UCCF) via any of CP (RAN) (e.g., illustrated as N_{CP} in FIG. 3) and UPF (e.g., illustrated as N_{UP} in FIG. 3).

A user consent control function (UCCF) is described herein.

The UCCF may provide user consent management functionality and may act as a user consent policy enforcement point (e.g., network element) in the system.

The UCCF may interact (e.g., exchange information) with the WTRU for any of collection, revocation and any update of user consent. The consent management protocol may be performed over CP (e.g., via RAN/SBI or eAMF/SBI) or UP (e.g., via RAN/UPF).

The UCCF may interface with UDM for any of (i) retrieval of default/initial consent and related authorization settings and (ii) pushing updates to consent settings information based on input from the WTRU. The UCCF may interface with the PCF to receive user consent policy information (as further described herein). The UCCF may be co-located with existing NFs (e.g., any of AMF, PCF).

The UCCF may provide a data collection user consent management service over SBI to other functions NFs (e.g., any of AIML, sensing, positioning data collection). The UCCF may verify user consent information including, for example, collecting user consent on the WTRU on behalf of the NFs. The UCCF may notify the NFs about user consent updates (e.g., any of consent granted, revoked, suspended, resumed) based on updates received from the subscription data and/or the WTRU. The UCCF may maintain a data collection user consent context for the WTRU (as further described herein).

An example of UCCF deployment as a network function (NF) in the CN is represented on FIG. 2 and FIG. 3. Any other example of deployments may be applicable to embodiments described herein. For example, the UCCF functionality may be deployed as part of an application function (AF) which may communicate with the CN via the network exposure function (NEF). In another example, the UCCF may be deployed as part of an AF part of an application enablement layer or, in another example, the UCCF may be deployed as a component of the common API framework (CAPIF). The aforementioned deployments are examples of deployment and do not affect or restrict the role and function of the UCCF in the system.

User consent policy information is described herein.

The user consent policy information for the WTRU may apply for different data collection types (such as e.g., any of AIML model training, sensing). For a (e.g., each) data collection type the policy may include any of (i) a data sharing policy (e.g., rule), (ii) a (e.g., data collection) roaming policy (e.g., rule), (iii), a data collection scope, (iv) a user consent collection trigger policy, (v) a data retention policy, and (vi) a data collection reward policy.

In example, a data sharing policy (e.g., rule) may indicate whether collected data sharing (e.g., with any of third-party AF such as handset vendor, any other third-party application servers or clients with a service agreement with the MNO, other WTRUs) may be allowed. The data sharing policy (e.g., rule) may include one or more identifiers (e.g., AF fully qualified domain name (FQDN)) authorized for sharing the collected data with (e.g., if sharing is allowed).

A (e.g., data collection) roaming policy (e.g., rule) may indicate whether data collection may be allowed while roaming. A (e.g., data collection) roaming policy (e.g., rule) may include one or more public land mobile network (PLMN) IDs where data collection may be authorized (e.g., if roaming data collection is allowed).

A data collection scope may indicate the scope (e.g., property, characteristic) of the data collection (e.g., any of duration, location, time of day, data capacity limits, data allowed to be collected).

A user consent collection trigger policy may indicate one or more conditions for collecting user consent (e.g., any of on network access, on-demand prior to data collection, etc.)

A data retention policy may indicate how long the data may be retained by the network and/or third party.

A data collection reward policy may indicate whether the data collection may be subject to operator incentives for the user (e.g., with data used for monetization purposes as described further herein).

A WTRU user consent context is described herein.

The UCCF may maintain a user consent context per WTRU. The user consent context may include user consent information associated with data collection operations in the system.

The UCCF may create a WTRU user consent context when (e.g., after) the WTRU may register with the network or when requested by an NF for a data collection session, based on, for example, user consent collection trigger policy (respectively on network access or on demand).

The user consent context may include one or more user consent entries, where a (e.g., each) user consent entry may be identified by a user consent reference ID (UC-RID) allocated by the UCCF. An (e.g., each) entry may include any of the following pieces of information.

In an example, a user consent context entry may include the data collection originating entity ID (e.g., any of NF, AF).

In an example, a user consent context entry may include a data collection session reference ID (DCS-RID) which may (e.g., uniquely) identify a data collection session. For example, the DCS-RID may be provided by the data collection initiating entity. In another example, the DCS-RID may be assigned by the data collection system at data collection session establishment.

In an example, a user consent context entry may include the data collection session metadata, which may include information associated with the data collection session such as any of which data may collected, the data collection session member WTRUs or RAN nodes, etc.

In an example, a user consent context entry may include the type (or intent/purpose) of the data collection (such as e.g., any of AIML, sensing, positioning).

In an example, a user consent context entry may include the scope of the data collection (e.g., duration, location).

In an example, a user consent context entry may include the data sharing policy (e.g., whether and what data may be shareable with MNO roaming partners, third party, including e.g., the identifiers of the third party that may consume the collected data).

In an example, a user consent context entry may include the data retention policy (e.g., indicating how long the data may be retained by the network and/or third party).

In an example, a user consent context entry may include any of the SMF ID and PDU session ID associated with the data collection session.

User consent management for data collection procedures are described herein.

User consent collection is described herein.

Network initiated user consent collection is described herein.

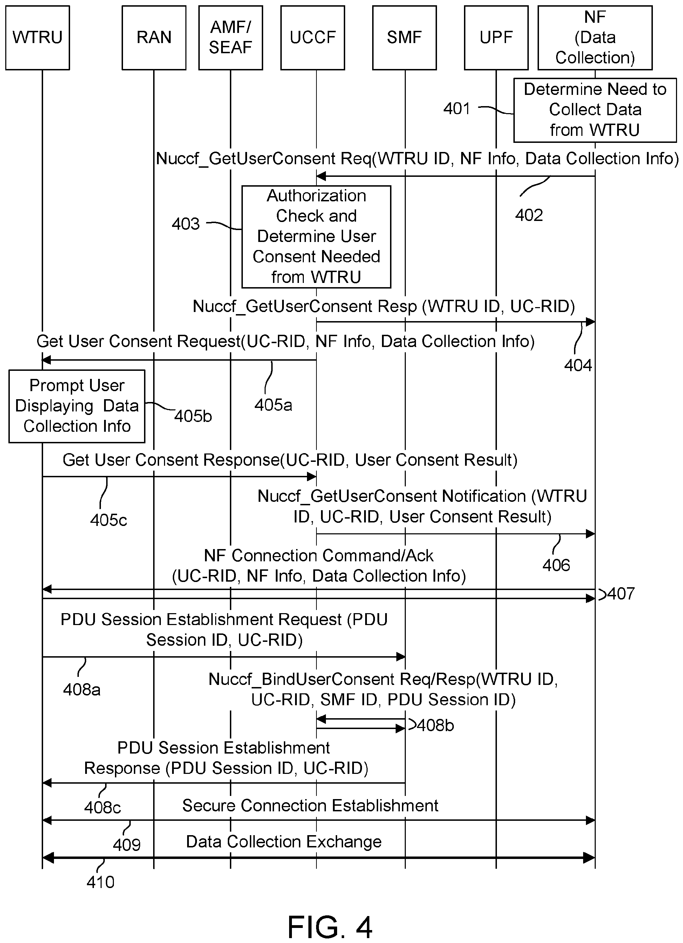

FIG. 4 is a diagram illustrating an example procedure for user consent collection from a WTRU initiated by a NF that may determine (e.g., intend) to collect data from the WTRU. The UCCF may receive a request for user consent for the data collection from the NF. The UCCF may send a request message to the WTRU to obtain user consent for the data collection. The WTRU may (e.g., display information to) prompt the user and may obtain the user consent result. The WTRU may send the user consent result to the UCCF which may inform the NF. The NF may initiate connection establishment with the WTRU to perform the data collection.

Pre-conditions (not shown at FIG. 4) are described herein.

The WTRU may register with (e.g., send registration information to) the network providing any of dynamic user consent capabilities, data collection capabilities e.g., including type of data that WTRU may collect (e.g., any of sensing and AIML model training data). In an example, the WTRU may perform a registration procedure with an AMF over the N1 interface (as shown in FIG. 2). In another example, the WTRU may send any of its dynamic user consent capabilities and data collection capabilities (e.g., directly) to the UCCF (e.g., after a successful primary authentication with the network) using any of the N_{CP} and N_{UP} interfaces (as shown in FIG. 3).

The UCCF may receive (e.g., from the AMF or (e.g., directly) from the WTRU) and may store information about the WTRU and any of its user consent and data collection capabilities. The UCCF may receive from a UDM/UDR data collection subscription data (e.g., the type of data the WTRU may be authorized to exchange) and from a PCF a user consent policy information for the WTRU as described herein.

As shown at 401, a NF performing data collection may determine to initiate a data collection session with a WTRU (e.g., triggered by any of an external AF, other NF, O&M). The NF may be, for example, any of an NWDAF, a sensing control function, and a positioning function (e.g., LMF). The NF may determine to initiate the data collection session based on any of a request message and based on a data collection policy. For example, a data collection NF may receive a message from an AF (directly or via a NEF) requesting data collection for training an AIML model or for collecting sensing data to update a spatial map.

As shown at 402, the NF may send a request message to the UCCF to check for user consent for the determined data collection initiation. The NF may provide any of the WTRU ID (e.g., any of a SUPI, a globally unique temporary identifier (GUTI)), NF information (e.g., NF ID, FQDN) and data collection metadata information. The data collection information may include parameters describing any of the data collection and its scope. The parameters may include for example, any of a data collection session identifier, the data collection type (e.g., AIML, sensing, positioning), the scope of the data collection (e.g., duration, location) and parameters of the user consent entry described herein.

As shown at 403, the UCCF may check if the NF is authorized to perform data collection with the WTRU, based on any of WTRU capabilities, subscription data (e.g., whether the WTRU may be capable and authorized for the (e.g., given) data collection type). The UCCF may determine if an existing and valid user consent entry (e.g., from the user consent context associated with the WTRU) may have been previously granted and may be matching the parameters of the requested user consent. A valid user consent entry may be an entry for which the scope (e.g., any of location, duration) may not have expired and/or may be applicable. For example, to identify if an existing and valid user consent entry is available, the UCCF may check whether the data collection information may match existing information in the WTRU user consent context. If an existing and valid user consent entry is not available, the UCCF may determine to request the user consent on the WTRU according to the user consent collection trigger policy. In an example, the UCCF may store the NF information and data collection information in the WTRU user consent context. The UCCF may allocate a UC-RID to identify the user consent associated with the data collection. In an example, the NF may be implicitly subscribed for user consent notifications updates from UCCF.

As shown at 404, the UCCF may send a response message to the NF including the UC-RID (e.g., from any of an existing user consent entry and a newly created one) acknowledging the request. If the UCCF determined an existing user consent entry, the message may include a user consent indication (e.g., grant or rejection). In an example, the user consent indication may be absent or unknown in the response message, which may indicate to the NF that UCCF may (e.g., need to) collect the user consent.

As shown at 405a, the UCCF may not have identified an existing and valid user consent entry. The UCCF may send first message 405a (e.g., referred to as user consent request message) to the WTRU. The first message 405a may include any of the UC-RID, NF info and data collection information. The first message 405a may be transported over CP (e.g., using any of NAS and RRC transport) or over UP (via UPF/RAN) connection. In an example, the WTRU may have subscribed with the UCCF to receive messages related to the user consent management over the UP.

As shown at 405b, the WTRU may prompt the user (via a user interface) for user consent based on displaying the data collection information. For example, the information that may be sent for display to the user may include one or more data collection attributes that may indicate any of the type of data collected, the scope of the data collection, applicable incentives (e.g., any of credit on mobile service, monetary compensation based on operator monetization scheme, etc.). The WTRU may receive (e.g., obtain) from the user interface an indication of user consent grant or rejection for the data collection.

In an example, the WTRU may store the UC-RID and data collection information e.g., locally.

As shown at 405c, the WTRU may send a second message 405c (referred to as response message) to the network including any of the UC-RID and a user consent indication (grant or rejection). Upon receiving the response, the UCCF may store the user consent indication e.g., along with the created user consent entry (e.g., created in block 403). The UCCF may store the indication (e.g., grant or rejection) e.g., for any of traceability, user consent enforcement purposes.

As shown at 406, the UCCF may send a notification message to the NF including any of a WTRU ID, UC-RID, data collection session identifier and the user consent indication (e.g., grant or rejection). In an example, (not shown in FIG. 4), the UCCF may update the UDM/UDR with user consent for data collection information (including any of UC-RID, data collection information).

As shown at 407, upon obtaining a granted user consent indication, the NF may trigger the data collection at the WTRU. For example, the NF may send a third message (referred to as connection command message) to the WTRU for triggering any of the establishment and the modification of a data collection session. For example, the third message may indicate that any of a setup and a modification of a data session to perform the data collection may be requested. The third message may include any of UC-RID, NF info (e.g., FQDN), and data collection information. The third message may be transmitted using any of NAS and RRC transport or over UP (via UPF/RAN) connection. In an example, the WTRU may have subscribed with the NF to receive messages related to data collection triggering over the UP (e.g., existing UP connection). The WTRU may send an acknowledge message to indicate acceptance to initiate connection for data collection. In an example, the WTRU may maintain granted user consent locally and may validate that the UC-RID received in the connection command message may correspond to a UC-RID which may have been granted and may be valid (e.g., as shown with 405a, 405b, 405c) prior to establishing/modifying any connection for the purpose of data collection.

As shown at 408a, the WTRU may send a fourth message (referred to as PDU session establishment/modification request message) to the SMF including any of a PDU session ID and the UC-RID.

As shown as 408b, the SMF may send a request message (referred to herein as seventh message) to the UCCF to bind the PDU session to the user consent context and subscribe for user consent notifications updates from UCCF. The SMF may apply QoS policy from the PCF to the PDU session adapted for the data collection session. The PCF may determine charging policy to be applied for the data collection traffic (e.g., any of no charging to user, collect data volume for incentive credits for the end user). The charging policy may be leveraged to create incentives for the user to grant consent for data collection (e.g., any of monetary compensation, credits against mobile plan, part of a data monetization framework).

As shown as 408c, the SMF may respond to the WTRU by sending a PDU session establishment/modification response including any of the PDU session ID and the UC-RID, to confirm establishment/ modification of the PDU session to be used for data collection.

As shown as 409, the WTRU and NF may establish a secure connection over the PDU session.

As shown as 410, the WTRU and NF may perform data collection. In an example, the WTRU may display ongoing data collection information to the user.

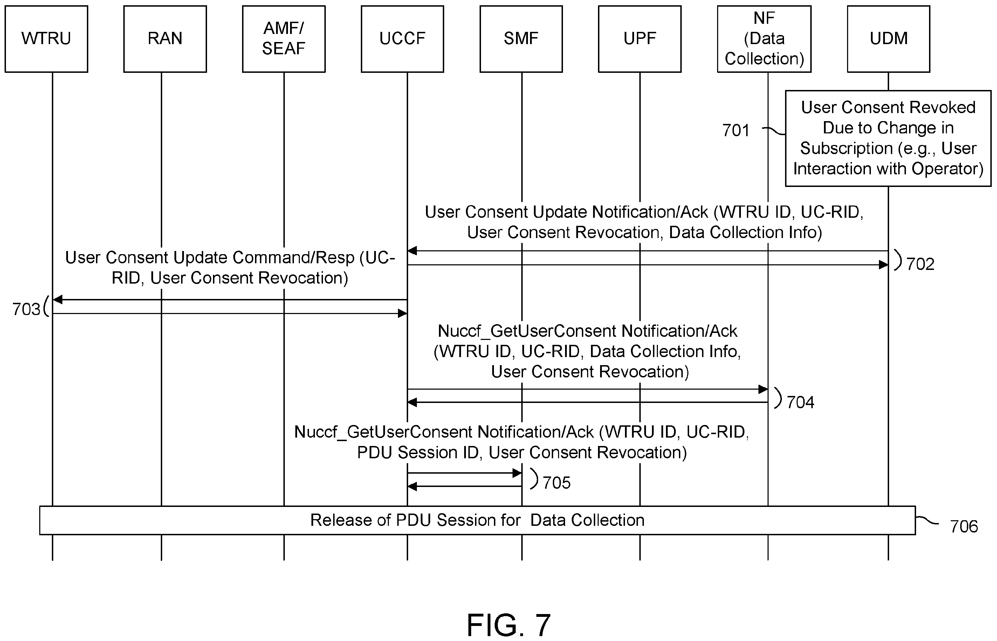

In embodiments described herein, if a user consent entry (e.g., UC-RID) expires or becomes invalid (e.g., a WTRU may change location where the UC may not be valid) as a data collection session may be ongoing, the UCCF may perform one or more operations described at 603 to 606 as shown at FIG. 7 to attempt to refresh the user consent and terminate the data collection if user consent is not obtained.

WTRU initiated user consent collection is described herein.

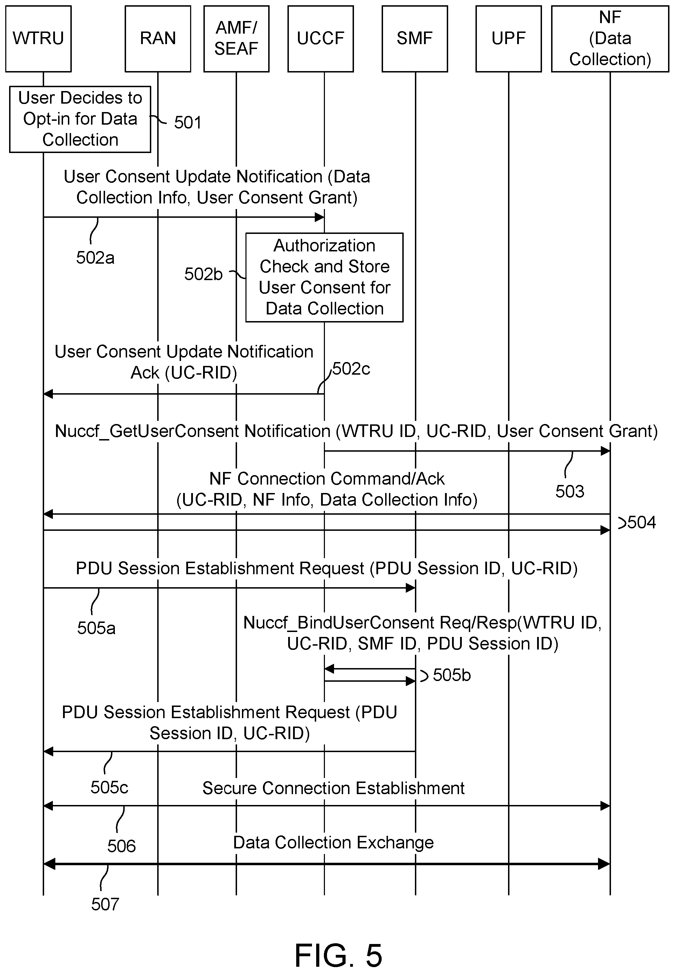

FIG. 5 is a diagram illustrating an example procedure for WTRU initiated user consent collection for data collection (e.g., based on action from the user on (e.g., a user interface of) the WTRU). The UCCF may receive a request for user consent for the data collection from the WTRU. The UCCF may send a request message to the WTRU to obtain user consent for the data collection. The WTRU may (e.g., display information to) prompt the user and obtain the user consent result. The WTRU may send the user consent result to the UCCF which may inform the NF. The NF may initiate connection establishment/modification with the WTRU to perform the data collection.

Pre-conditions (not shown at FIG. 5) are described herein.

The WTRU may have registered with the network providing any of dynamic user consent capabilities and data collection capabilities including the type of data that the WTRU may collect (e.g., sensing or AIML model training data) according to embodiment described herein.

The UCCF may have received (e.g., from AMF or (e.g., directly) from the WTRU) and stored information about the WTRU and its user consent and data collection capabilities.

As shown at 501, the user may decide to opt-in (e.g., grant consent) for data collection on the WTRU (e.g., based on an action on the WTRU user interface).

As shown at 502a, the WTRU may send a user consent update notification message to the UCCF including any of data collection information and an indication of user consent grant. The data collection information may indicate, for example, any of the data collection type (e.g., any of sensing, AIML model training) and scope. The data collection information may be obtained from a prior (network initiated) user consent collection procedure. The message may be transported over CP (e.g., using any of NAS and RRC transport) or over UP (e.g., via UPF/RAN) connection.

As shown at 502b, the UCCF may check if the WTRU is authorized for data collection based on any of WTRU capabilities, subscription data (e.g., indicating whether the WTRU may be capable and authorized for the given data collection type). If the notification includes a UC-RID, the UCCF may determine if an existing and valid user consent entry (e.g., from the user consent context associated with the WTRU) may have been previously granted and may be matching the parameters of the requested user consent. For example, to identify if an existing and valid user consent entry is available, the UCCF may check whether the data collection information matches existing information in the WTRU user consent context. The UCCF may update an existing and valid user consent entry or create a new user consent entry, including allocating a UC-RID, to identify the user consent associated with the data collection.

As shown at 502c, the UCCF may send a message to the WTRU acknowledging acceptance of user consent.

As shown at 503, the UCCF may send a notification message to the data collection NF including any of a UC-RID, a user consent grant indication. In an example, the NF may have subscribed for user consent update from a prior user consent collection (e.g., where user consent may have been denied). In another example, the data collection NF may have registered or subscribed with the UCCF to provide a notification endpoint for receiving user consent notifications.

Operations shown at 504, 505a, 505b, 505c, 506 and 507 at FIG. 5 may be similar to the operations 407, 408a, 408b, 408c, 409 and 410 shown and described at FIG. 4.

User consent revocation is described herein.

WTRU initiated user consent revocation is described herein.

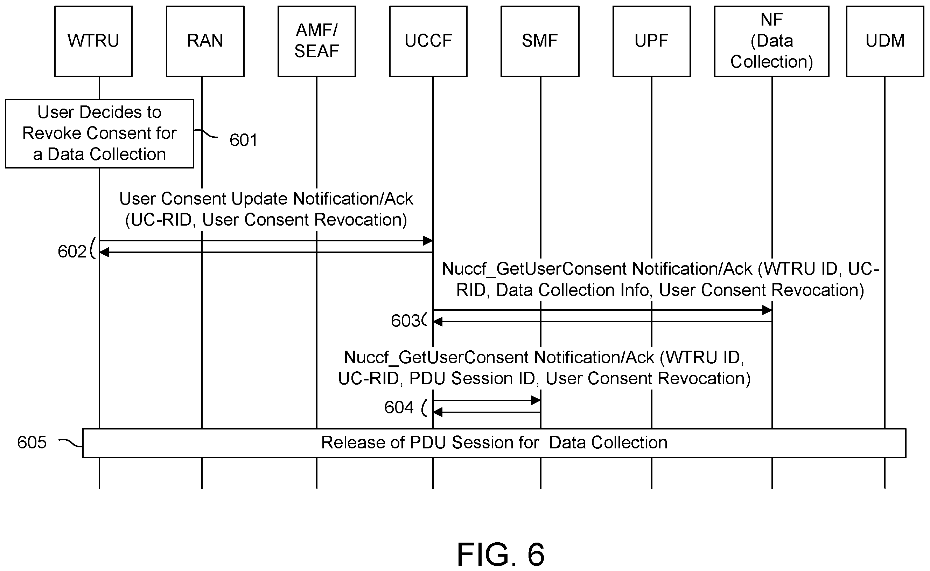

FIG. 6 is a diagram illustrating an example procedure for user consent revocation initiated by the WTRU (e.g., based on action from the user interface). The WTRU may send the user consent revocation indication to the UCCF which may inform the NF performing the data collection and the serving SMF. The WTRU or the network may initiate the release of the PDU session.

Pre-conditions (not shown at FIG. 6) are described herein.

The WTRU may have granted user consent for data collection as described herein. NF and SMF may have subscribed with UCCF for user consent notification updates.

As shown at 601, the user may decide to opt-out (e.g., revoke consent) for data collection on the WTRU. For example, the user may perform an action on the WTRU (e.g., user interface) based on ongoing data collection session information being displayed on the WTRU user interface.

As shown at 602, the WTRU may send a fifth message (referred to as user consent update notification message) to the UCCF including any of a UC-RID and an indication of user consent revocation. Upon receiving the revocation request from the WTRU, the UCCF may update the corresponding user consent entry to indicate that the user consent may have been revoked. The WTRU may stop data collection transfer based on receiving any of a user indication as shown at 601 and an acknowledgement from UCCF (e.g., to the fifth message) as shown at 602.

As shown at 603, the UCCF may send a notification message to the NF including any of a WTRU ID, a UC-RID, data collection information and a user consent revocation indication.

As shown at 604, the UCCF may send a notification message to the SMF including any of a WTRU ID, a UC-RID, a PDU session ID and a user consent revocation indication.

As shown at 605, any of the WTRU and the network may initiate the release/modification of the PDU session used for data collection. For example, the WTRU may receive a sixth message (referred to as PDU session release/modification request) indicating any of a modification and a release of the PDU session used for the data collection.

Network initiated user consent revocation is described herein.

FIG. 7 is a diagram illustrating an example procedure for user consent revocation initiated by the network (e.g., based on user/operator interaction). The UDM may send the user consent revocation indication to the UCCF which may informs any of the NF performing the data collection, the serving SMF and the WTRU. The WTRU or the network may initiate the release/modification of the PDU session.

Pre-conditions (not shown at FIG. 7) are described herein.

The WTRU may have granted user consent for data collection as described herein. Any of NF and SMF may have subscribed with UCCF for user consent notification updates. The UCCF may be subscribed with UDM for any of data collection subscription data updates and user consent updates.

In an example, as shown at 701, the user consent for data collection may be revoked following a change in subscription data (e.g., based on user interaction with operator). In another example (not shown), the data collection revocation may be initiated by an AF (e.g., based on user interaction with the AF).

In an example, as shown at 702, the UDM/UDR may send a user consent update notification message to the UCCF including any of a UC-RID, an indication of user consent revocation and data collection information (e.g., data type) for which the revocation may apply. Based on (e.g., upon) receiving the update notification message from the UDM, the UCCF may update the corresponding user consent entry to indicate that the user consent may be revoked. In another example (not shown), the UCCF may receive the user consent update notification message from an AF (e.g., directly or via a NEF).

As shown at 703, the UCCF may send a (e.g., user consent update command) message to the WTRU including any of a UC-RID, a user consent revocation indication. The WTRU may display confirmation of user consent opt-out/revocation execution. The WTRU may stop data collection transfer based on (e.g., upon) receiving command from the UCCF. The message may be transported over CP (e.g., using any of NAS and RRC transport) or over UP (via UPF/RAN) connection. In embodiments described herein, the WTRU may have subscribed with the UCCF to receive messages related to the user consent management over the UP.

Operations shown at 704, 705, and 706 at FIG. 7 may be similar to the operations 603, 604 and 605 shown and described at FIG. 6

User consent suspend/renew is described herein.

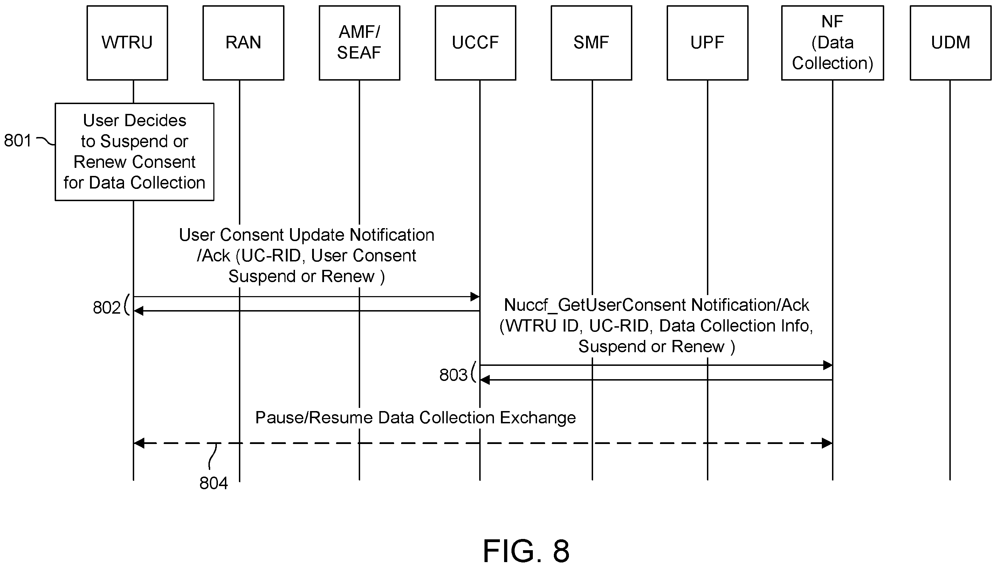

FIG. 8 is a diagram illustrating an example procedure for a WTRU to suspend or renew user consent (e.g., based on action from the user on the WTRU user interface). The WTRU may send a suspend (respectively renew) indication to the UCCF which may inform the NF performing the data collection and the serving SMF. The WTRU or the NF may pause (respectively resume) the data collection traffic accordingly.

Pre-conditions (not shown at FIG. 8) are described herein.

The WTRU may have granted user consent for data collection according to any embodiment described herein. Any of the NF and SMF may have subscribed with UCCF for user consent notification updates.

As shown at 801, the user may decide to temporarily opt-out (e.g., suspend user consent) for data collection on the WTRU (respectively, opt back in (e.g., renew user consent)). For example, the user may perform an action on the WTRU (e.g., user interface) based on, for example, ongoing data collection session information being displayed on the WTRU user interface. Opting-back-in or renewing a user consent may be referred to as re-activating a user consent that may have been suspended or that may have expired.

As shown at 802, the WTRU may send a (e.g., user consent update notification) message to the UCCF including any of a UC-RID and an indication of user consent suspend (respectively renew). The UCCF may determine if an existing user consent entry (e.g., from the user consent context associated with the WTRU) exist based on the UC-RID and is matching the parameters of the requested/notified user consent. If the request/notification is to suspend the user consent and the UCCF has identified an existing user consent entry, the UCCF may update the user consent entry to indicate that the user consent entry may be suspended. If the request/notification is to renew the user consent and the UCCF has identified an existing user consent entry, the UCCF may update the user consent entry to indicate that the user consent entry may be valid (e.g., any of renewed, active). If the UCCF has not identified an existing user consent entry, the UCCF may indicate a failure to the requesting/notifying WTRU and may include/indicate a failure reason.

As shown at 803, if the UCCF has determined an existing user consent entry, the UCCF may send a notification message to the NF including any of a WTRU ID, a UC-RID, data collection information and an indication of user consent suspend (respectively renew).

As shown at 804, the WTRU and NF may pause (respectively resume) the transfer of data collection traffic. Unlike the revocation procedure, any of the PDU session and WTRU-NF connection may be maintained while the user consent may be suspended. The SMF may be notified by the UCCF as described herein. When the user consent for the data collection is suspended the SMF may initiate a pause of charging procedure to reflect accurately the data collection traffic being exchanged under user consent.

Royalty fee determination for data collection and usage of collected data is described herein.

A data collection monetization framework is described herein that may enable an operator to determine the value of data collected to be used for monetization purposes and establish incentive schemes to obtain user consent for data collection.

Embodiments are described herein with a value determination for monetization purposes as an example of metric determination to be used to incentivize a user to provide user consent for data collection. Embodiments described herein are not limited to monetization-based incentives, and any kind of metric determination to used to provide any kind of incentives (such as e.g., the capacity to access new/additional services) may be applicable to embodiments described herein.

Determination of (e.g., monetary) incentives is describe herein.

Determination of the value of the data (e.g., a metric associated with the data) is described herein.

The charging policy may be leveraged to create incentives for the user to grant consent for data collection. For example, a data collection reward policy may be broadcasted to users to encourage users to contribute to data collection. An example of incentive is monetary compensation determined based on the value of the data reported by the WTRU. The information displayed to the user may indicate the type of data collected, the scope of the data collection, applicable (e.g., monetary) incentives.

In an example, (e.g., monetary) incentives or compensation may be determined based on the value of (a metric associated with the) data. In one example, the value (e.g., price in US dollar, any kind of metric representative)) of data may be determined based on a function of at least one or more of (i) characteristics of data, (ii) how data may be obtained, (iii) consent or security related details of data, (iv) an amount of resources/energy spent to obtain data, and (v) environmental or background information related to collected data.

In an example, the characteristics of data may include any of (i) a size or volume of the data (e.g., measured in megabytes), (ii) one or more types of data (e.g., phase measurements, timing measurements), (iii) a quality of data (e.g., uncertainty or inaccuracy in measurement in any of seconds, dB, dBm or meters, uncertainty in the estimate such as ground truth, associated quality of service), (iv) contents of data (e.g., images, L1, L2 or L3 measurements of signals, photos, sound), (v) whether data may be processed (e.g., any of data being averaged over a duration, data not being averaged over a duration, power measurements below a threshold being dropped from data), (vi) which entity may process data (e.g., gNB, core network entity), (vii) validity conditions of data (e.g., data expiring in 30 days), and (viii) characteristics of a target included in sensing measurements in data (e.g., any of mobile target, static target, large building, a tree, soft or hard surface, etc.).

In an example, how data may be obtained may include any of (i) a duration during which data may be obtained (e.g., hours, days, seconds), (ii) timestamp(s) associated with data (e.g., measurements being made one year ago), (iii) methods used to obtain data (e.g., using radio access technology (RAT) dependent techniques such as measurements made by DL-RS, RAT independent techniques such as measurements obtained from sensors, global navigation satellite system (GNSS) or global positioning system (GPS)), (iv) hardware used to collect data (e.g., number of antenna panels used, quality or grades of amplifiers or filter used), (v) where data may be obtained (e.g., any of measurements obtained in indoor, measurements obtained outdoor, measurements obtained in a highway, measurements obtained inside of a car, measurements obtained outside of a car, geographical area, predefined zones, etc.), (vi) when data may be obtained (e.g., during the day, at nighttime), (vii) measurements and/or RS configurations used to obtain data (e.g., number of TRPs), (viii) frequency of provision of data from a WTRU to the network (e.g., every day, every year), (ix) which network entity requested for data collection (e.g., gNB, core network entity such as LMF), (x) whether the WTRU or user may report data to the network autonomously or based on a request from the network, (xi) a proportion of the data compared to the amount of data provided by other WTRUs or companies, and (xii) whether the WTRU or user is registered to provide data to the network (e.g., a user may be registered to provide data to the network to train AIML models at the network).

Related to the frequency of provisioning data by a WTRU, the network may associate a greater value of incentive with a WTRU participating consistently/frequently in data collection compared to a WTRU sporadically participating. The system may enable a system of charging tiers for data collection contributors to increase reward levels (e.g., additional, incremental compensation) and further incentivize the most active data collection contributors. The data collection tier level for the WTRU may be maintained as part of the subscription data in UDM/UDR and used in the charging policy to determine the corresponding subscriber compensation level when performing the charging operations. The operator may attach a greater value to data collected from a frequent/reliable contributing WTRU compared to a less frequent contributor.

In an example, consent or security related details of data may include any of (i) contents of user consent (e.g., network nodes that may access the data), (ii) data visibility for operator (e.g., data accessible by any of the gNB, RAN entity, CN entity, level of exposure of data to the network entities), and (iii) whether data may be collected with permission (e.g., sensing data collected without permission from the owner of the target, sensing data collected from commercial UAVs which may be authorized to be sensed), and (iii) whether data may be collected from a WTRU that may be a more frequent, reliable or more sporadic data collection contributor.

Related to contents of user consent, for example, the value of data may be determined based on the state of the consent associated with the data, e.g., whether the consent may be suspended or revoked. The value of the data may be lower if the associated consent is interrupted (e.g., revoked or suspended) midst data collection, compared to the uninterrupted data collection associated with active user consent. For example, the value of data may be determined based on whether the consent may be suspended or renewed based on the request from the WTRU or from the network. For example, the value of data may be lower if associated user consent is revoked based on the request from the network, compared to the consent revoked based on the request from the WTRU.

In an example, the amount of resources/energy spent to obtain data may include any of (i) resources used to obtain data (e.g., measurement time, time and frequency resources, number of measurement occasions, number of DL-RSs received by the WTRU), (ii) a power (e.g., measured in watt) or energy (e.g., measured in joules) consumed by the WTRU or network to collect data.

In an example, the environmental or background information related to collected data may include any of (i) one or more conditions under which data may have been obtained (e.g., raining, cloudy, sunny, snowing, fire, maximum, minimum or average temperature during which data may have been collected, the user or WTRU may have been rotating, the WTRU or user may have underneath an object, the WTRU or user may have been underground, the WTRU or user may have buried in snow or dirt, the user or WTRU may have been underwater, the user or WTRU may have been in a vehicle or container), (ii) whether the WTRU may have provided or reported data through roaming or within the serviced area (e.g., non-roaming area), (iii) user or WTRU condition when data may have been collected (e.g., user may have been stationary or mobile, user may have been sleeping, user may have been exercising, user may have been conversing, user or WTRU may have been in a power saving mode), (iv) a number of WTRUs, terminals or companies who may participate in data collection, (v) whether data may be obtained collaboratively (e.g., using positioning reference unit, measurements being made and shared with more than one WTRUs, reported data containing data collected by other WTRUs and/or terminals), and (vi) a purpose, cause, or intent of obtaining data (e.g., any of for surveillance, for training AIML models, for positioning, for sensing).

Examples of determination of the value of data are described herein.

In an example, the WTRU may collect (e.g., monetary) incentives from a service provider at a fixed fee for a volume of measurements reported by the WTRU. For example, the service provider may pay $1.00 for every 1GB of data (e.g., measurements) the WTRU may report to the network.

In an example, the WTRU may collect (e.g., monetary) incentives from a service provider based on the proportion of data the WTRU may have contributed to the collection (e.g., the WTRU may contribute to 10% of collected data by the network. The WTRU may collect 10% of pooled payment).

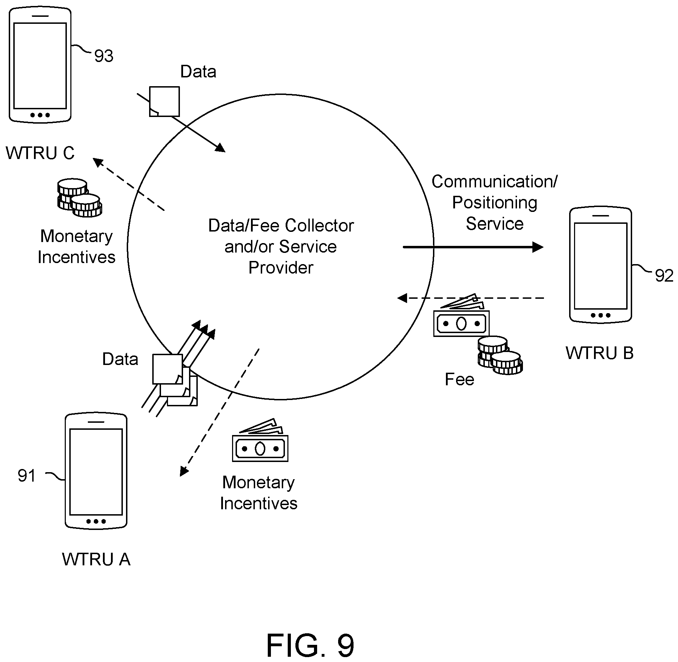

FIG. 9 is a diagram illustrating an example of (e.g., monetary) incentives determination and exchange framework for data collection. In the example, a first WTRU 91 (referred to as WTRU A) and a third WTRU 93 (referred to as WTRU C) may provide data to the data collector and/or service provider. A second WTRU 92 (referred to as WTRU B) may receive a service (e.g., communication service, positioning service) from the service provider. The second WTRU 92 may pay the required fee to the service provider. Based on the proportion of data provided by the first WTRU 91 and the third WTRU 93, a (e.g., each) WTRU may receive respective monetary incentives from the service provider and/or data collector.

In an example, the WTRU may collect (e.g., monetary) incentives from the service provider based on type of data provided by the WTRU (e.g., timing measurements, phase measurements). For example, 1GB of timing measurements may worth (e.g., be associated with) a first value/metric (e.g., $20.00) and 1GB of power measurements may worth (e.g., be associated with) a second value/metric (e.g., $10.00).

In an example, the (e.g., monetary) incentives may be determined based on the context of user consent. For example, there may be different levels of sharing users' data. The first level may indicate that the data of a first WTRU may be shared with data of other WTRUs from the same company (e.g., WTRUs from Company A). The second level may indicate that the data of a first WTRU may be shared with data of other WTRUs from same or different company (e.g., WTRUs from Company A or Company B). Based on the number of WTRUs who may chose the first or second level, value of data may be determined. In another example, user consent may include a purpose of data usage. For example, collected data from users may be used for analytical purpose by the network. In another example, collected data may be used by the network to enhance the service (e.g., for performing AIML-based beam management, AIML based positioning). Depending on the type of user consent, the value of data may be determined. For example, if the data are used for analytical purpose by the network, 1GB of data may worth (e.g., be associated with) a first value (e.g., $10.00). If data are used for enhancing network service, 1GB of data may worth (e.g., be associated with) a second value (e.g., $20.00). The value of data may be determined based on a multiplicative factor. For example, if the data are used for enhancing network service quality, the value of data may be determined based on a function (e.g., an equation v=aB where v, a, B may be the value of data, the factor greater than 0 (e.g., a=1.5) and a default price of data, respectively. Based on the purpose of usage of data, the multiplicative factor "a" may vary.

Royalty fee determination between entities is described herein.

Illustrative examples of transaction of royalty fees related to supplied data by different companies are described herein.

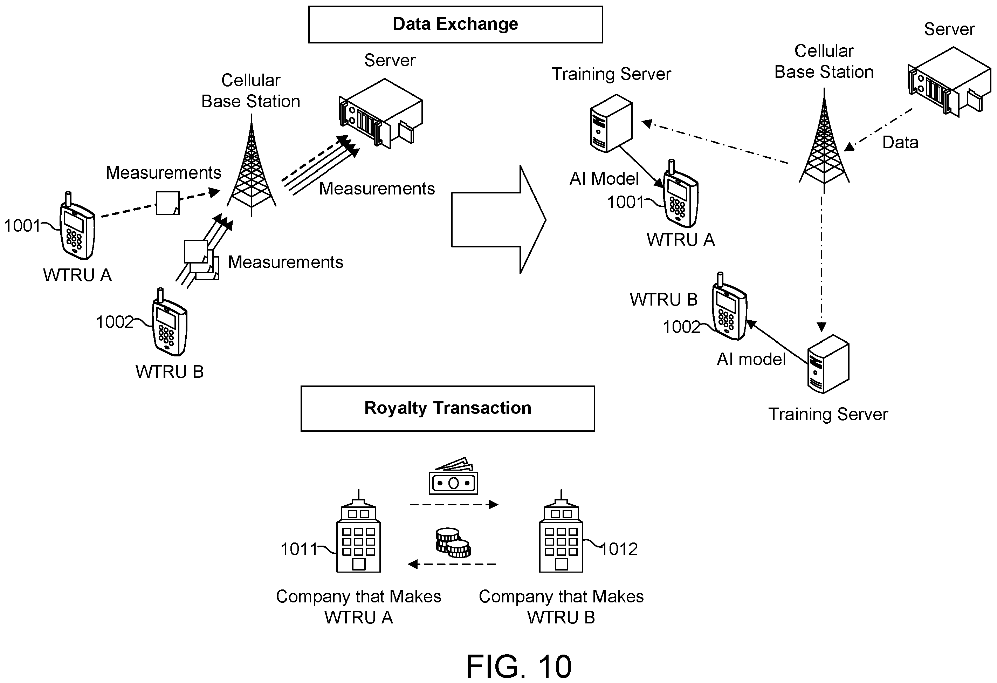

FIG. 10 is a diagram illustrating an example of royalty fee determination between entities. Royalty fee paid from one entity (e.g., Company A) to another entity (e.g., Company B) for using data provided by Company B is illustrated in FIG. 10. FIG. 10 shows an example of how royalties paid to Company A by Company B may depend on how much data may be provided by WTRUs belonging to Company A and Company B. In the illustrated example, a first WTRU 1001 belonging to a first company 1011 (referred to as Company A) may benefit from measurements collected by at least a second WTRU 1002 belonging to a second company 1012 (referred to as Company B). In the illustrated example, the second company 1012 may collect more incentives than the first company 1011 based on the second WTRU 1002 (e.g., associated with the second company 1012) contributing with more measurements to the data collection than the first WTRU 1001 (e.g., associated with the first company 1011).

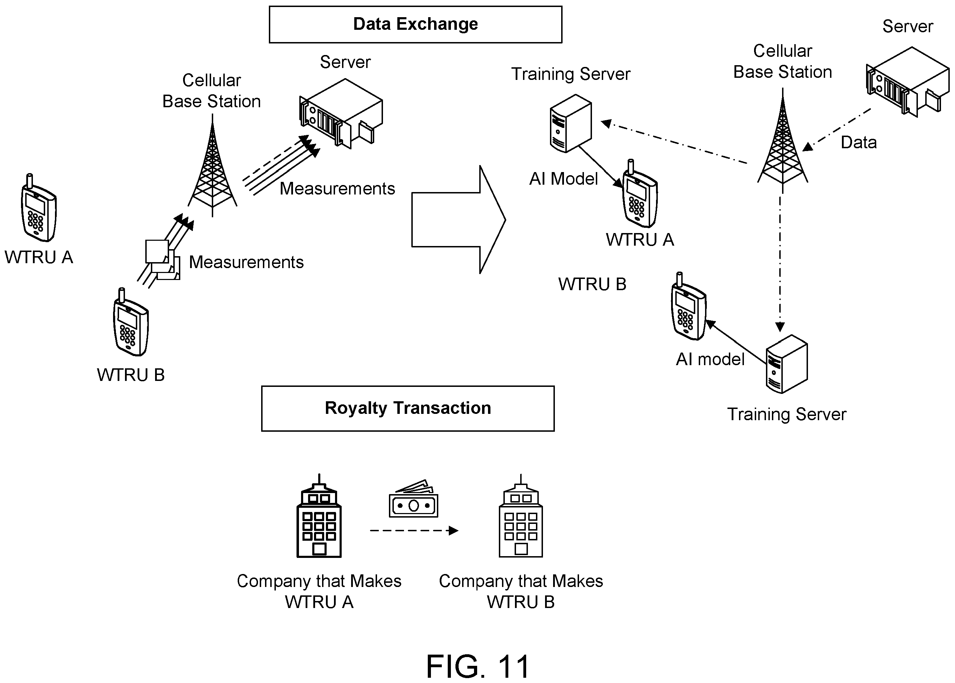

FIG. 11 is a diagram illustrating another example of royalty fee determination between entities. In the illustrated example, (e.g., only) WTRUs from company B may report measurements to the network for data collection purpose. The company making the WTRUs that may not report measurements to the network for data collection purpose, may pay a royalty fee to the company that may make the WTRUs reporting the measurements to the network.

How royalty fee may be determined and collected is described herein.

Examples of determination of the royalty fee between companies are described herein. Royalty fees may be determined based on the examples or methods used to determine the value/metric of data described herein.

In a first example, Company A may owe royalty fees to the Company B based on its WTRU's performance (e.g., AIML-based communication) benefiting from measurements made and reported by WTRUs being manufactured by Company B. The value of data may be determined based on a fixed price. For example, Company B may charge Company A $0.1/MB of measurement data Company A may use.

In a second example, Company B may charge royalty fee to Company C, a manufacturer of gNB, based on its AIML model being trained based on the measurements reported by WTRUs from Company B. Company B may charge $0.1/MB of measurement data Company C may use.

In a third example, Company D, a manufacturer of gNBs, may charge royalty fee to Company C, another manufacturer of gNB, based on sensing target detection becoming feasible based on the measurements reported by gNBs from Company D. Company D may charge $0.1/MB of measurement data gNBs from Company C may use.

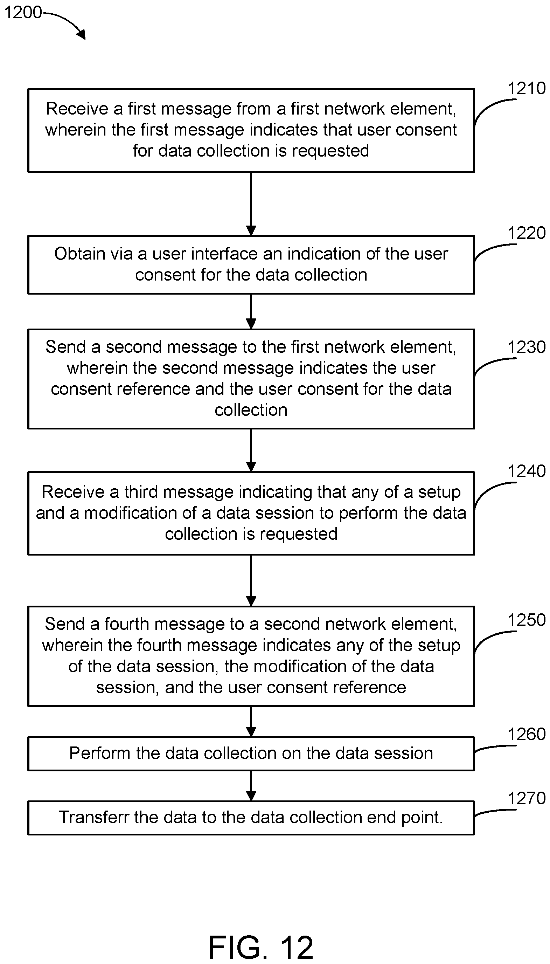

FIG. 12 is a diagram illustrating an example method 1200 for collecting user consent for data collection, implemented in a WTRU. The WTRU may include circuitry including a transmitter, a receiver, a processor, and memory. The WTRU may be configured to carry out the method 1200. As shown at 1210, the method 1200 may include receiving a first message from a first network element. In various embodiments, the first message may indicate that user consent for data collection may be requested. In various embodiments, the first message may indicate a user consent reference and one or more data collection attributes to be consented by a user. As shown at 1220, the method 1200 may include obtaining via a user interface an indication of (e.g., an acceptation of) the user consent for the data collection according to the one or more data collection attributes. As shown at 1230, the method 1200 may include sending a second message to the first network element. In various embodiments, the second message may indicate the user consent reference and the (e.g., indication of the) user consent (e.g., acceptation) for the data collection. As shown at 1240, the method 1200 may include receiving a third message indicating that any of a setup and a modification of a data session to perform the data collection may be requested. In various embodiments, the third message may include information related to any of data to be reported and a data collection end point. As shown at 1250, the method 1200 may include sending a fourth message to a second network element. In various embodiments, the fourth message may indicate any of the setup of the data session, the modification of the data session, and the user consent reference. As shown at 1260, the method 1200 may include performing the data collection on the data session. As shown at 1270, the method 1200 may include transferring the data to the data collection end point.

In various embodiments, the method 1200 may further comprise sending for display, via the user interface, the one or more data collection attributes to be consented.

In various embodiments, the third message may further indicate any of a data network name (DNN) and a single network slice selection assistance information (S-NSSAI).

In various embodiments, the data to be reported may include any of AIML model training data, sensing data, measurement data and positioning data.

In various embodiments, the fourth message may further indicate a data collection session reference identifier (DCS-RID).

In various embodiments, the method 1200 may further comprise obtaining, via the user interface, revocation information indicating that the user consent for the data collection may be revoked.

In various embodiments, the method 1200 may further comprise stopping transferring the data related to the data collection on the data session (e.g., in response to obtaining revocation information).

In various embodiments, the method 1200 may further comprise sending a fifth message to the first network element. In various embodiments, the fifth message may indicate (i) that the user consent for the data collection may be revoked, and (ii) the user consent reference.

In various embodiments, the method 1200 may further comprise receiving a sixth message from the second network element. In various embodiments, the sixth message may indicate any of a modification and a release of the data session used for the data collection.

In various embodiments, the first network element may comprise a UCCF.

In various embodiments, the second network element may comprise a SMF.

In various embodiments, the first message may comprise a user consent request message.

In various embodiments, the second message may comprise a user consent response message.

In various embodiments, the third message may comprise a connection command message.

In various embodiments, the third message may be received from a third network element.

In various embodiments, the third network element may comprise a data collection network function (e.g., the data collection end point).

In various embodiments, the data session may comprise a PDU session.

In various embodiments, the fourth message indicating the setup of the data session may comprise a PDU session establishment request.

In various embodiments, the fourth message indicating the modification of the data session may comprise a PDU session modification request.

In various embodiments, the fifth message may comprise a user consent update notification message.

In various embodiments, the sixth message indicating the modification of the data session may comprise a PDU session modification request.

In various embodiments, the sixth message indicating the release of the data session may comprise a PDU session release request.

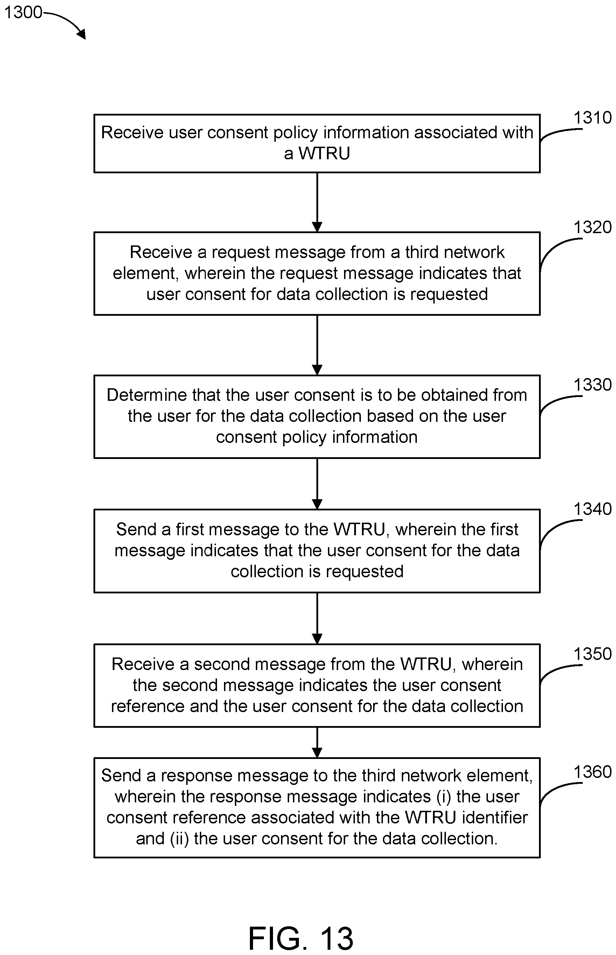

FIG. 13 is a diagram illustrating an example method 1300 for collecting user consent for data collection, implemented in a first network element. The first network element may include circuitry including a transmitter, a receiver, a processor, and memory. The first network element may be configured to carry out the method 1300. As shown at 1310, the method 1300 may include receiving user consent policy information associated with a WTRU. As shown at 1320, the method 1300 may include receiving a request message from a third network element. In various embodiments, the request message may indicate that user consent for data collection may be requested. In various embodiments, the request message may indicate a WTRU identifier and one or more data collection attributes to be consented by a user. In various embodiments the WTRU identifier may identify the WTRU. As shown at 1330, the method 1300 may include determining that the user consent may be to be obtained from the user for the data collection based on the user consent policy information. As shown at 1340, the method 1300 may include sending a first message to the WTRU. In various embodiments, the first message may indicate that the user consent for the data collection may be requested. In various embodiments, the first message may indicate a user consent reference and the one or more data collection attributes to be consented by the user. As shown at 1350, the method 1300 may include receiving a second message from the WTRU. In various embodiments, the second message may indicate the user consent reference and (e.g., an indication of) the user consent (e.g., acceptation) for the data collection. As shown at 1360, the method 1300 may include sending a response message to the third network element. In various embodiments, the response message may indicate (i) the user consent reference associated with the WTRU identifier and (ii) the (e.g., indication of the) user consent (e.g., acceptation) for the data collection.

In various embodiments, the method 1300 may further comprise, before sending the first message to the WTRU and in response to the request message, sending an acknowledge message to the third network element. In various embodiments, the acknowledge message may indicate the user consent reference associated with the WTRU identifier.

In various embodiments, the method 1300 may further comprise receiving a seventh message from a second network element. In various embodiments, the seventh message may indicate a data session for the data collection and the user consent reference associated with the data session.

In various embodiments, the user consent policy information may indicate any of a data sharing policy, a data collection roaming policy, a data collections scope, a user content collection trigger policy and a data retention policy.

In various embodiments, the first network element may comprise a UCCF.

In various embodiments, the second network element may comprise a SMF.

In various embodiments, the third network element may comprise a data collection network function (e.g., a data collection end point).

In various embodiments, the request message (e.g., received from the third network element) may comprise a UCCF get user consent request message.

In various embodiments, the response message (e.g., sent to the third network element) may comprise a UCCF get user consent notification message.

In various embodiments, the acknowledge message (e.g., sent to the third network element) may comprise a UCCF get user consent response message.

In various embodiments, the seventh message (e.g., received from the second network element) may comprise a UCCF bind user consent request message.

While not explicitly described, embodiments described herein may be employed in any combination or sub-combination. For example, the present principles are not limited to the described variants, and any arrangement of variants and embodiments can be used.

Besides, any characteristic, variant or embodiment described for a method is compatible with an apparatus device comprising means for processing the disclosed method, with a device comprising circuitry, including any of a transmitter, a receiver, a processor, and memory, the circuitry being operable (e.g., configured) to process the disclosed method, with a computer program product comprising program code instructions and with a non-transitory computer-readable storage medium storing program instructions. Besides, any characteristic, variant or embodiment described for a WTRU is compatible with an (e.g., infrastructure) network element of the cellular network. Any characteristic, variant or embodiment described for the method 1200 implemented in a WTRU is compatible with the method 1300 implemented in a (e.g., infrastructure) network element of the cellular network.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, ¶ 6 or means-plus-function claim format, and any claim without the terms "means for" is not so intended.

The content of each of the following references is incorporated by reference herein in its entirety:
- 3GPP R2-2407807, "CR on RAN2 inputs to TR 38.843", 3GPP TSG-RAN WG2 Meeting #127, Maastricht, Netherlands, August 19 - 23, 2024
- 3GPP RP-242389, "LS on AIML data collection", 3GPP TSG RAN Meeting #105, Melbourne, Australia, Sept. 9th -12th, 2024
- 3GPP SP-241402, "LS to SA WGs on AIML data collection", 3GPP TSG SA Meeting #10Melboume, Australia, September 10-13, 2024, Rel-19
- 3GPP TS 33.501 "Technical Specification Group Services and System Aspects; Security architecture and procedures for 5G system (Release 19)," V19.1.0 (January 2025)
- 3GPP TS 23.273, "Technical Specification Group Services and System Aspects; 5G System (5GS) Location Services (LCS); Stage 2 (Release 19)", V19.0.0 (2024-09)
- Official Joumal of the European Union, "REGULATION (EU) 2016/679 OF THE EUROPEAN PARLIAMENT AND OF THE COUNCIL of 27 April 2016 on the protection of natural persons with regard to the processing of personal data and on the free movement of such data, and repealing Directive 95/46/EC (General Data Protection Regulation)" May 4, 2016
- 3GPP TS 23.501, "Technical Specification Group Services and System Aspects, System architecture for the 5G System (5GS); Stage 2 (Release 19)", V19.2.1 (2025-01)
- 3GPP TS 23.502, "Technical Specification Group Services and System Aspects; Procedures for the 5G System (5GS); Stage 2 (Release 19)," V19.2.0 (December 2024)
- 3GPP TS 23.482, "Functional architecture and information flows for AIML Enablement Service (Release 19)", V19.0.0 (December 2024)
- 3GPP TS 23.437, "Service Enabler Architecture Layer for Verticals (SEAL); Spatial map and Spatial anchors (Release 19)", V19.0.0 (December 2024)
- 3GPP TS 23.222, "Technical Specification Group Services and System Aspects; Functional architecture and information flows to support Common API Framework for 3GPP Northbound APIs; Stage 2 (Release 19)", V19.4.0 (2024-12).

## Claims

1. A wireless transmit/receive unit, WTRU, comprising circuitry, including a transmitter, a receiver, a processor, and memory, configured to:
receive a first message from a first network element, wherein the first message indicates that user consent for data collection is requested, and wherein the first message indicates a user consent reference and one or more data collection attributes to be consented by a user;
obtain via a user interface an indication of the user consent for the data collection according to the one or more data collection attributes;
send a second message to the first network element, wherein the second message indicates the user consent reference and the user consent for the data collection;
receive a third message indicating that any of a setup and a modification of a data session to perform the data collection is requested, and wherein the third message includes information related to any of data to be reported and a data collection end point;
send a fourth message to a second network element, wherein the fourth message indicates any of the setup of the data session, the modification of the data session, and the user consent reference;
perform the data collection on the data session; and
transfer the data to the data collection end point.

2. A method implemented in a wireless transmit/receive unit, WTRU, the method comprising:
receiving a first message from a first network element, wherein the first message indicates that user consent for data collection is requested, and wherein the first message indicates a user consent reference and one or more data collection attributes to be consented by a user;
obtaining via a user interface an indication of the user consent for the data collection according to the one or more data collection attributes;
sending a second message to the first network element, wherein the second message indicates the user consent reference and the user consent for the data collection;
receiving a third message indicating that any of a setup and a modification of a data session to perform the data collection is requested, and wherein the third message includes information related to any of data to be reported and a data collection end point;
sending a fourth message to a second network element, wherein the fourth message indicates any of the setup of the data session, the modification of the data session, and the user consent reference;
performing the data collection on the data session; and
transferring the data to the data collection end point.

3. The WTRU of claim 1 further configured to or the method of claim 2 further comprising sending for display, via the user interface, the one or more data collection attributes to be consented.

4. The WTRU of any of claims 1 and 3 or the method of any of claims 2 to 3, wherein the third message further indicates any of a data network name, DNN, and a single network slice selection assistance information, S-NSSAI.

5. The WTRU of any of claims 1 and 3 to 4 or the method of any of claims 2 to 4, wherein the data to be reported include any of AIML model training data, sensing data, measurement data and positioning data.

6. The WTRU of any of claims 1 and 3 to 5 or the method of any of claims 2 to 5, wherein the fourth message further indicates a data collection session reference identifier, DCS-RID.

7. The WTRU of any of claims 1 and 3 to 6 further configured to or the method of any of claims 2 to 6 further comprising obtaining, via the user interface, revocation information indicating that the user consent for the data collection is revoked.

8. The WTRU of claim 7 further configured to or the method of claim 7 further comprising stopping transferring the data related to the data collection on the data session.

9. The WTRU of any of claims 7 to 8 further configured to or the method of any of claims 7 to 8 further comprising sending a fifth message to the first network element, wherein the fifth message indicates (i) that the user consent for the data collection is revoked, and (ii) the user consent reference.

10. The WTRU of any of claims 7 to 9 further configured to or the method of any of claims 7 to 9 further comprising receiving a sixth message from the second network element, wherein the sixth message indicates any of a modification and a release of the data session used for the data collection.

11. A first network element comprising circuitry, including a transmitter, a receiver, a processor, and memory, configured to:
receive user consent policy information associated with a wireless transmit/receive unit, WTRU;
receive a request message from a third network element, wherein the request message indicates that user consent for data collection is requested, wherein the request message indicates a WTRU identifier and one or more data collection attributes to be consented by a user, and wherein the WTRU identifier identifies the WTRU;
determine that the user consent is to be obtained from the user for the data collection based on the user consent policy information;
send a first message to the WTRU, wherein the first message indicates that the user consent for the data collection is requested, and wherein the first message indicates a user consent reference and the one or more data collection attributes to be consented by the user;
receive a second message from the WTRU, wherein the second message indicates the user consent reference and the user consent for the data collection; and
send a response message to the third network element, wherein the response message indicates (i) the user consent reference associated with the WTRU identifier and (ii) the user consent for the data collection.

12. A method implemented in a first network element, the method comprising:
receiving user consent policy information associated with a wireless transmit/receive unit, WTRU;
receiving a request message from a third network element, wherein the request message indicates that user consent for data collection is requested, wherein the request message indicates a WTRU identifier and one or more data collection attributes to be consented by a user, and wherein the WTRU identifier identifies the WTRU;
determining that the user consent is to be obtained from the user for the data collection based on the user consent policy information;
sending a first message to the WTRU, wherein the first message indicates that the user consent for the data collection is requested, and wherein the first message indicates a user consent reference and the one or more data collection attributes to be consented by the user;
receiving a second message from the WTRU, wherein the second message indicates the user consent reference and the user consent for the data collection; and
sending a response message to the third network element, wherein the response message indicates (i) the user consent reference associated with the WTRU identifier and (ii) the user consent for the data collection.

13. The first network element of claim 11 further configured to or the method of claim 12 further comprising, before sending the first message to the WTRU and in response to the request message, sending an acknowledge message to the third network element, wherein the acknowledge message indicates the user consent reference associated with the WTRU identifier.

14. The first network element of any of claims 11 and 13 further configured to or the method of any of claims 12 to 13 further comprising receiving a seventh message from a second network element, wherein the seventh message indicates a data session for the data collection and the user consent reference associated with the data session.

15. The first network element of any of claims 11 and 13 to 14 or the method of any of claims 12 to 14, wherein the user consent policy information indicates any of a data sharing policy, a data collection roaming policy, a data collections scope, a user content collection trigger policy and a data retention policy.
